# EUROPEAN PATENT APPLICATION

(11) **EP 2 489 972 A1**
(43) Date of publication of application: **22.08.2012**
(21) Application number: 10823241.4
(22) Date of filing: 10.08.2010
(51) Int. Cl.: F28D 7/10, F24H 1/00, F25B 29/00

(54) **INTERMEDIATE HEAT EXCHANGER AND AIR-CONDITIONING HOT-WATER SUPPLY SYSTEM USING SAME**

(30) Priority: 16.10.2009 JP 2009238939
(71) Applicant: Hitachi, Ltd., Chiyoda-ku Tokyo 100-8280 (JP)
(72) Inventor: KOKUGAN, Yoko, Chiyoda-ku, Tokyo 100-8220 (JP); ENDOH, Kazuhiro, Chiyoda-ku, Tokyo 100-8220 (JP); KUSUMOTO, Hiroshi, Chiyoda-ku, Tokyo 100-8220 (JP)
(74) Representative: Beetz & Partner
(86) International application number: PCT/JP2010/063563
(87) International publication number: WO 2011/045973

(57) **Abstract**

[Object]

In disposing a circuit for refrigerant for adjusting air temperature and a circuit for refrigerant for supplying hot water in heat exchange relation, improved convenience and further energy saving are achieved by interposing a heat exchanger having a reasonable structure.

[Solution]

An intermediate heat exchanger (23) which is used in an air-conditioning hot-water supply system and which exchanges heat between a refrigerant circulating through a circuit for refrigerant for adjusting air temperature, a refrigerant circulating through a circuit for refrigerant for supplying hot water, and a heating medium circulating through a heating medium circuit is configured by an outer tube and four inner tubes. The outer tube is used as a heat transfer tube for heating medium (23c) connected to the heating medium circuit by a pipe. Two of the four inner tubes are used as heat transfer tubes for refrigerant for adjusting air temperature (23a) connected to the circuit for refrigerant for adjusting air temperature by a pipe. The other two inner tubes are used as heat transfer tubes for refrigerant for supplying hot water (23b) connected to the circuit for refrigerant for supplying hot water by a pipe. The heat transfer tubes for refrigerant for adjusting air temperature (23a) and the heat transfer tubes for refrigerant for supplying hot water (23b) are bonded (101).

## Description

### TECHNICAL FIELD

The present invention relates to an intermediate heat exchanger and air-conditioning hot-water supply system using the same, and in particular to an intermediate heat exchanger suitable for an air-conditioning hot-water supply system in which a circuit for refrigerant for adjusting air temperature which performs a switchover between cooling and heating and a circuit for refrigerant for supplying hot water which stores hot water are connected via an intermediate heat exchanger to provide a binary refrigeration system, and an air-conditioning hot-water supply system using the same.

### BACKGROUND ART

In order to improve energy saving properties of an air conditioner and a water heater, examples of air-conditioning hot-water supply systems provided by combining a circuit for refrigerant for supplying hot water and a circuit for refrigerant for adjusting air temperature include those disclosed in Patent literature 1 and Patent literature 2. These are devices each including a circuit for refrigerant for supplying hot water, a circuit for refrigerant for adjusting air temperature, and a circuit for cold/warm water for adjusting air temperature, and in which heat is exchanged between the circuit for refrigerant for supplying hot water and the circuit for refrigerant for adjusting air temperature via a water heat exchanger (intermediate heat exchanger) provided in the circuit for cold/warm water for adjusting air temperature. The water heat exchanger used herein is configured by an outer tube and a plurality of inner tubes, and is so configured that a predetermined number of inner tubes are used for the circuit for refrigerant for adjusting air temperature; the other inner tubes are used for the circuit for refrigerant for supplying hot water; and the cold/warm water of the circuit for cold/warm water for adjusting air temperature is circulated through the gap between the outer tube and the inner tubes.

Accordingly, since the circuit for refrigerant for supplying hot water and the circuit for refrigerant for adjusting air temperature are disposed in heat exchange relation via the cold/warm water, the hydrothermal source does not lower the evaporating pressure of the circuit for refrigerant for supplying hot water as an aerothermal energy source does. This enables efficient output of hot water at a high temperature, as well as cooling and heating.

### CITATION LIST

### PATENT LITERATURE

Patent literature 1: Japanese Unexamined Patent Publication No. S60-248963
Patent literature 2: Japanese Unexamined Patent Publication No. S60-248965

### SUMMARY OF INVENTION

### TECHNICAL PROBLEM

In a prior art air-conditioning hot-water supply system, however, for example, when a hot water supply operation is performed during a cooling operation, there has been the problem in terms of convenience that hot water supply and air conditioning cannot be performed optionally simultaneously. For example, it is necessary to perform a cooling operation for a certain period of time, and then switch to a heating operation to perform a backup heating operation. Moreover, when a hot water supply operation is performed during a heating operation, such a method involving, in a circuit for adjusting air temperature, drawing an amount of heat greater than that necessary for heating, and using a portion of the amount of heat drawn for the circuit for refrigerant for supplying hot water is employed. Accordingly, when a hot water supply load and an air conditioning load are large, integrating the water heater and the air conditioner as a single system may rather lower the performance. Thus, prior art air-conditioning hot-water supply systems have been yet to be improved in terms of the demand for further energy saving in devices in recent years.

The present invention has been made in view of such issues, and its object is to, in disposing a circuit for refrigerant for adjusting air temperature and a circuit for refrigerant for supplying hot water in heat exchange relation, achieve improved convenience and further energy saving by interposing a heat exchanger having an efficient structure.

### SOLUTION TO PROBLEM

In order to achieve the above-mentioned object, in accordance with the present invention, there is provided an intermediate heat exchanger for use in an air-conditioning hot-water supply system comprising a circuit for refrigerant for adjusting air temperature, a circuit for refrigerant for supplying hot water, and a heating medium circuit for circulating a heating medium which thermal storage by exchanging heat with a refrigerant circulating through the circuit for refrigerant for adjusting air temperature and the circuit for refrigerant for supplying hot water, the intermediate heat exchanger being so configured that heat is exchanged between a refrigerant circulating through the circuit for refrigerant for adjusting air temperature, a refrigerant circulating through the circuit for refrigerant for supplying hot water, and a heating medium circulating through the heating medium circuit, the intermediate heat exchanger including an outer tube and a plurality of inner tubes, the outer tube being used as a first heat transfer tube connected by a pipe to any one of the three circuits: the circuit for refrigerant for supplying hot water and the circuit for refrigerant for adjusting air temperature and the heating medium circuit, a predetermined number of inner tubes out of the plurality of inner tubes being used as second heat transfer tubes connected by a pipe to one of the other two circuits, the other inner tubes being used as third heat transfer tubes connected by a pipe to the other two circuits, and the second heat transfer tubes and the third heat transfer tubes being bonded.

Herein, the term "bonding" in the present invention means bonding in a manner of being capable of heat exchange. In other words, the case where inner tubes are bonded to each other via an insulator is not included in the present invention. Moreover, any bonding method may be used in the present invention as long as heat is exchanged between the fluids flowing inside the inner tubes via a portion where an inner tube and an inner tube are bonded. For example, in the present invention, mechanical bonding (screw fastening, bundling with a band), metallurgical bonding (types of welding such as brazing, bonding by pressure welding and the like) and other methods can be employed.

Moreover, the constitution that "the second heat transfer tubes and the third heat transfer tubes are bonded" in the present invention includes such a constitution that at least one of the inner tubes constituting the second heat transfer tubes and at least one of the inner tubes constituting the third heat transfer tubes are bonded.

Moreover, in the intermediate heat exchanger of the present invention, in the above constitution, it is preferable that the plurality of inner tubes are arranged in such a manner that, in a cross section perpendicular to the direction of the central axis of the outer tube, a figure formed by connecting the centers of cross sections of the four inner tubes adjacent to each other with straight lines becomes a square, and are arranged in such a manner that the centers of cross sections of the inner tubes constituting the second heat transfer tubes and the centers of cross sections of the inner tubes constituting the third heat transfer tubes are positioned at the opposite corners of the square, and the inner tubes adjacent to each other are bonded.

Moreover, in the intermediate heat exchanger of the present invention, in the above constitution, it is preferable that the inner tubes positioned at the opposite corners of the square are arranged at an interval from each other.

Moreover, in the intermediate heat exchanger of the present invention, in the above constitution, it is preferable that the plurality of inner tubes are arranged in such a manner that, in a cross section perpendicular to the direction of the central axis of the outer tube, a figure formed by connecting the centers of cross sections of the three inner tubes adjacent to each other with straight lines becomes a triangle, and the three inner tubes adjacent to each other include the inner tubes constituting the second heat transfer tubes and the inner tubes constituting the third heat transfer tubes, and the inner tubes constituting the second heat transfer tubes and the inner tubes constituting the third heat transfer tubes adjacent to each other are bonded.

Moreover, in the intermediate heat exchanger of the present invention, in the above constitution, it is preferable that the inner tubes constituting the second heat transfer tubes adjacent to each other, or the inner tubes constituting the third heat transfer tubes adjacent to each other are arranged at an interval.

Moreover, in the intermediate heat exchanger of the present invention, in the above constitution, it is preferable that the inner tubes are bonded preferably by brazing.

Moreover, in the intermediate heat exchanger of the present invention, in the above constitution, it is preferable that the inner tubes are bonded by bundling the plurality of inner tubes with a band.

Moreover, in the intermediate heat exchanger of the present invention, in the above constitution, it is preferable that a predetermined number of the plurality of inner tubes are used as heat transfer tubes for the circuit for refrigerant for adjusting air temperature, the other inner tubes are used as heat transfer tubes for the circuit for refrigerant for supplying hot water,
and the outer tube is used as a heat transfer tube for the heating medium circuit.

Moreover, in the intermediate heat exchanger of the present invention, in the above constitution, it is preferable that the plurality of inner tubes are circular tubes.

Moreover, in the intermediate heat exchanger of the present invention, in the above constitution, it is preferable that the plurality of inner tubes are rectangular tubes.

Moreover, in the intermediate heat exchanger of the present invention, in the above constitution, it is preferable that the plurality of inner tubes are integral casting.

Moreover, in the intermediate heat exchanger of the present invention, in the above constitution, it is preferable that the plurality of inner tubes have different diameters.

Moreover, in the intermediate heat exchanger of the present invention, in the above constitution, it is preferable that when heat is exchanged between a high-pressure-side refrigerant of the circuit for refrigerant for adjusting air temperature and a low-pressure-side refrigerant of the circuit for refrigerant for supplying hot water in the intermediate heat exchanger, the refrigerant flowing through the circuit for refrigerant for adjusting air temperature and the refrigerant flowing through the circuit for refrigerant for supplying hot water are countercurrents.

Moreover, in the intermediate heat exchanger of the present invention, in the above constitution, it is preferable that when heat is exchanges between the low-pressure-side refrigerant of the circuit for refrigerant for adjusting air temperature, the low-pressure-side refrigerant of the circuit for refrigerant for supplying hot water, and cold/warm water of the heating medium circuit in the intermediate heat exchanger, the low-pressure-side refrigerant of the circuit for refrigerant for adjusting air temperature and the low-pressure-side refrigerant of the circuit for refrigerant for supplying hot water are countercurrents relative to the cold/warm water of the heating medium circuit.

Moreover, in accordance with the present invention, there is provided an air-conditioning hot-water supply system comprising a circuit for refrigerant for adjusting air temperature, a circuit for refrigerant for supplying hot water, and a heating medium circuit for circulating a heating medium which exchanges heat with a refrigerant circulating through the circuit for refrigerant for adjusting air temperature and the circuit for refrigerant for supplying hot water and thermal storage, and the air-conditioning hot-water supply system incorporating the intermediate heat exchanger having the above-mentioned configuration.

### ADVANTAGEOUS EFFECT OF INVENTION

According to the present invention, an air conditioner and a water heater can be operated optionally simultaneously. Energy saving effects can be increased regardless of the magnitudes of the air conditioning and hot water supply loads. Moreover, since natural energies (renewable energies) such as solar heat and terrestrial heat can be utilized as the heat source for air conditioning and supplying hot water, the energy saving property of the air-conditioning hot-water supply system can be further enhanced.

### BRIEF DESCRIPTION OF DRAWINGS

[Fig. 1] Fig. 1 is a system diagram of an air-conditioning hot-water supply system according to a first embodiment of the present invention.
[Fig. 2] Fig. 2 is a state table of operation mode according to the first embodiment of the present invention.
[Fig. 3] Fig. 3 is a system diagram which shows the flow of a refrigerant, water and brine in operation mode No. 1-0 in Fig. 2 according to the first embodiment of the present invention.
[Fig. 4] Fig. 4 is a system diagram which shows the flow of a refrigerant, water and brine of operation mode No. 1-1 in Fig. 2 according to the first embodiment of the present invention.
[Fig. 5] Fig. 5 is a system diagram which shows the flow of a refrigerant, water and brine of operation mode No. 2-0a in Fig. 2 according to the first embodiment of the present invention.
[Fig. 6] Fig. 6 is a system diagram which shows the flow of a refrigerant, water and brine of operation mode No. 2-0b in Fig. 2 according to the first embodiment of the present invention.
[Fig. 7] Fig. 7 is a system diagram which shows the flow of a refrigerant, water and brine of operation mode No. 2-1 in Fig. 2 according to the first embodiment of the present invention.
[Fig. 8] Fig. 8 is a system diagram which shows the flow of a refrigerant, water and brine of operation mode No. 2-2 in Fig. 2 according to the first embodiment of the present invention.
[Fig. 9] Fig. 9 is a system diagram which shows the flow of a refrigerant and water in operation mode No. 3-0 in Fig. 2 according to the first embodiment of the present invention.
[Fig. 10] Fig. 10 is a system diagram which shows the flow of a refrigerant, water and brine of operation mode No. 3-1 in Fig. 2 according to the first embodiment of the present invention.
[Fig. 11] Fig. 11 is a system diagram which shows the flow of a refrigerant and brine of operation mode No. 4-0 in Fig. 2 according to the first embodiment of the present invention.
[Fig. 12] Fig. 12 is a system diagram which shows the flow of a refrigerant and brine of operation mode No. 4-1 in Fig. 2 according to the first embodiment of the present invention.
[Fig. 13] Fig. 13 is a system diagram which shows the flow of a refrigerant and brine of operation mode No. 5-0 in Fig. 2 according to the first embodiment of the present invention.
[Fig. 14] Fig. 14 is a system diagram which shows the flow of a refrigerant and brine of operation mode No. 5-1 in Fig. 2 according to the first embodiment of the present invention.
[Fig. 15] Fig. 15 is an illustrative drawing which shows an intermediate heat exchanger according to the first embodiment of the present invention in the form of a plan view.
[Fig. 16] Fig. 16 is a cross-sectional view of the intermediate heat exchanger according to the first embodiment of the present invention, taken along line A-A' in Fig. 15.
[Fig. 17] Fig. 17 is a cross-sectional view of the intermediate heat exchanger according to the first embodiment of the present invention, taken along line B-B' in Fig. 16, with an end portion of the intermediate heat exchanger sectioned in the vertical direction.
[Fig. 18] Fig. 18 is a cross-sectional view of an intermediate heat exchanger according to a second embodiment of the present invention, taken along line A-A' in Fig. 15.
[Fig. 19] Fig. 19 is a cross-sectional view of an intermediate heat exchanger according to a third embodiment of the present invention, taken along line A-A' in Fig. 15.
[Fig. 20] Fig. 20 is a cross-sectional view of an intermediate heat exchanger according to a fourth embodiment of the present invention, taken along line A-A' in Fig. 15.
[Fig. 21] Fig. 21 is a cross-sectional view of an intermediate heat exchanger according to a fifth embodiment of the present invention, taken along line A-A' in Fig. 15.
[Fig. 22] Fig. 22 is a cross-sectional view of an intermediate heat exchanger according to a sixth embodiment of the present invention, taken along line A-A' in Fig. 15.
[Fig. 23] Fig. 23 is a cross-sectional view of an intermediate heat exchanger according to a seventh embodiment of the present invention, taken along line A-A' in Fig. 15.

### DESCRIPTION OF EMBODIMENTS

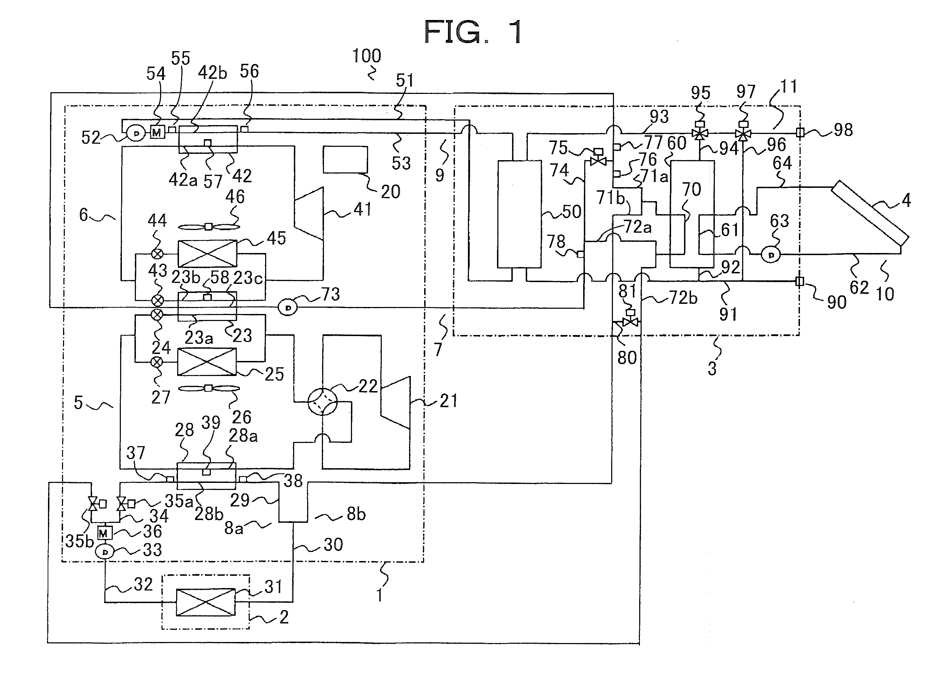

The first embodiment of an air-conditioning hot-water supply system and a heat pump unit according to the present invention will be described below with reference to Figs. 1 to 14. It should be noted that Fig. 1 and Figs. 3 to 14 show system diagrams of cycles, but does not show the flow of refrigerants and brine in the components which are connected with pipes.

An air-conditioning hot-water supply system 100 according to this embodiment, as shown in Fig. 1, includes the circuit for refrigerant for adjusting air temperature 5, a circuit for refrigerant for supplying hot water 6, and a heating medium circuit 7 for circulating a heating medium which thermal storage or cold heat by exchanging heat with a refrigerant circulating through the circuit for refrigerant for adjusting air temperature 5 and the circuit for refrigerant for supplying hot water 6, and has an intermediate heat exchanger 23 in which heat is exchanged between a refrigerant circulating through the circuit for refrigerant for adjusting air temperature 5, a refrigerant circulating through the circuit for refrigerant for supplying hot water, and the heating medium circulating through the heating medium circuit 7.

Detailed description will be provided below. Fig. 1 is a system diagram of the air-conditioning hot-water supply system 100. The air-conditioning hot-water supply system 100 includes a heat pump unit 1 installed outside the building, an indoor unit 2 installed inside the building, a hot water/heat storage tank unit 3 installed outside the building, and a solar heat collector 4 installed outside the building. Moreover, the air-conditioning hot-water supply system 100 includes the circuit for refrigerant for adjusting air temperature 5 which performs a switchover between cooling and heating, the circuit for refrigerant for supplying hot water 6 which performs operation for supplying hot water, the heating medium circuit 7 which radiates or collects heat using a heat/cold source, heating medium circuits for adjusting air temperature 8a, 8b, a hot water circuit 9, a heating medium circuit for collecting solar heat 10, and a hot water feed path 11. The heating medium circulating through the heating medium circuit 7 is heated by the heat obtained at the solar heat collector 4.

It should be noted that the circuit for refrigerant for adjusting air temperature 5 and the circuit for refrigerant for supplying hot water 6 can be referred to as a low-temperature-side refrigerant circuit and a high-temperature-side refrigerant circuit, respectively, considering the temperature level of the heat of refrigerating cycle.

The heat pump unit 1 includes the circuit for refrigerant for adjusting air temperature 5 having a compressor 21 and a utilization-side heat exchanger 28, and the circuit for refrigerant for supplying hot water 6 having a compressor 41 and a utilization-side heat exchanger 42. The intermediate heat exchanger 23 is disposed between the circuit for refrigerant for adjusting air temperature 5 and circuit for refrigerant for supplying hot water 6. A heating medium which exchanges heat with the refrigerant circulating through the circuit for refrigerant for adjusting air temperature 5 and circuit for refrigerant for supplying hot water 6 is introduced into the intermediate heat exchanger 23. In the intermediate heat exchanger 23, heat is exchanged between the refrigerant circulating through the circuit for refrigerant for adjusting air temperature 5, the refrigerant circulating through the circuit for refrigerant for supplying hot water 6, and the heating medium.

The circuit for refrigerant for adjusting air temperature 5 is configured by annularly connecting, with a conduit for refrigerant for adjusting air temperature, the compressor 21 which compresses the refrigerant for adjusting air temperature to make a high-temperature refrigerant, a four-way valve 22 which switches the direction of flow of the refrigerant for adjusting air temperature in cooling operation and heating operation, a heat transfer tube for refrigerant for adjusting air temperature 23a of the intermediate heat exchanger 23 which exchanges heat with the heating medium of refrigerant for supplying hot water and heating medium circuit 7 of circuit for refrigerant for supplying hot water 6, an expansion valve 24 disposed serially with the intermediate heat exchanger 23 as a decompression device for decompressing the refrigerant for adjusting air temperature, an air heat exchanger for adjusting air temperature 25 which is disposed in parallel with the intermediate heat exchanger 23 and exchanges heat with outdoor air transferred by a fan 26, an expansion valve 27 disposed serially with the air heat exchanger for adjusting air temperature 25 as a decompression device which decompresses the refrigerant for adjusting air temperature, and a heat transfer tube for refrigerant for adjusting air temperature 28a of the utilization-side heat exchanger 28 which exchanges heat with the heating medium of the circuit for heating medium for adjusting air temperature 8a.

Examples of the refrigerant of the circuit for refrigerant for adjusting air temperature 5 used include R290 (propane) which is a natural refrigerant having a low global warming coefficient.

The compressor 21 is a variable displacement compressor which is capable of capacity control. As such a compressor, piston, rotary, scroll, screw, and centrifugal compressors can be employed. Specifically, the compressor 21 is a scroll compressor, of which capacity can be controlled by inverter control, and rotational speed can be changed from low speed to high speed.

The intermediate heat exchanger 23 is a three-fluid heat exchanger which is integrally configured by the heat transfer tube for refrigerant for adjusting air temperature 23a, the heat transfer tube for refrigerant for supplying hot water 23b, and the heat transfer tube for heating medium 23c in a manner of being in thermal contact with each other. Moreover, the utilization-side heat exchanger 28 is configured by the heat transfer tube for refrigerant for adjusting air temperature 28a and the heat transfer tube for heating medium for adjusting air temperature 28b in a manner of being in thermal contact. The expansion valves 24, 27 adjust the flow rate ratio of the refrigerants of the intermediate heat exchanger 23 to air heat exchanger for adjusting air temperature 25.

It should be noted that the expansion valves 24, 27 are used to change the flow rate ratio of the refrigerant in the pipe in which the intermediate heat exchanger 23 and air heat exchanger for adjusting air temperature 25 are provided, but a three-way valve may be provided in a branched portion where the pipe is branched to the pipe in which the intermediate heat exchanger 23 and the air heat exchanger for adjusting air temperature 25 are provided.

The circuit for heating medium for adjusting air temperature 8a is configured by annularly connecting the heat transfer tube for heating medium for adjusting air temperature 28b of the utilization-side heat exchanger 28 of the circuit for refrigerant for adjusting air temperature 5, a supply pipe 29 of circuit for refrigerant for adjusting air temperature side, a supply pipe for adjusting air temperature 30, an indoor heat exchanger 31 placed in the indoor unit 2 which exchanges heat with indoor air, a return pipe for adjusting air temperature 32 including a circulation pump for heating medium for adjusting air temperature 33 and a heating medium flow rate sensor for adjusting air temperature 36, and a return pipe 34 on the circuit for refrigerant for adjusting air temperature side including an on-off valve 35a.

The circulation pump 33 is a pump for circulating the heating medium within the circuit 8a, and the flow rate sensor 36 is a sensor which detects the flow rate of the heating medium. The on-off valve 35a switches between the circuit for heating medium for adjusting air temperature 8a and the circuit for heating medium for adjusting air temperature 8b described later, along with an on-off valve 35b described later.

Herein, the circuit for heating medium for adjusting air temperature 8b is utilized when the temperature of water in a heat storage tank 60 is sufficiently high for performing heating by the indoor heat exchanger 31. At this time, the circuit for refrigerant for adjusting air temperature 5 is not operated, which allows maintaining high energy efficiency.

It should be noted that instead of providing the on-off valve 35a and on-off valve 35b respectively, a three-way valve may be provided in a connecting portion between the return pipe for adjusting air temperature 32, a second return pipe 72b and the pipe 34.

The circuit for refrigerant for supplying hot water 6 is configured by annularly connecting, with a conduit for refrigerant for supplying hot water, a compressor 41 which compresses the refrigerant for supplying hot water to heat the refrigerant, a heat transfer tube for refrigerant for supplying hot water 42a of the utilization-side heat exchanger 42 which exchanges heat between the heated refrigerant for supplying hot water and the water in the hot water circuit 9, an expansion valve 43 as a decompression device which decompresses the refrigerant for supplying hot water, the heat transfer tube for refrigerant for supplying hot water 23b of the intermediate heat exchanger 23 which exchanges heat between the refrigerant for adjusting air temperature of the circuit for refrigerant for adjusting air temperature 5 and the heating medium in the heating medium circuit 7, and which causes the refrigerant for supplying hot water at a low temperature and pressure to evaporate, an expansion valve 44 as a decompression device which is disposed in parallel with the expansion valve 43 and decompresses the refrigerant for supplying hot water, and an air heat exchanger for supplying hot water 45 which is disposed serially with the expansion valve 44, exchanges heat with the outdoor air transferred by the fan 46, and causes the low-temperature and low-pressure refrigerant to evaporate.

Examples of refrigerants in the circuit for refrigerant for supplying hot water 6 used include HFO1234yf having a low global warming coefficient, but are not limited to this. Since HFO1234yf is a low-pressure refrigerant as a refrigerant, using this provides an advantage of a thin wall thickness of the pipe.

In the compressor 41, the capacity can be controlled by inverter control, and rotational speed can be changed from low speed to high speed, as in the compressor 21. The utilization-side heat exchanger 42 is configured so that the heat transfer tube for refrigerant for supplying hot water 42a and the heat transfer tube for water for supplying hot water 42b are in contact with each other. The expansion valves 43, 44 adjust the flow rate ratio of the refrigerants of the intermediate heat exchanger 23 to the air heat exchanger for supplying hot water 45.

It should be noted that the expansion valves 43, 44 are used to change the flow rate ratio of the refrigerant in the pipe in which the intermediate heat exchanger 23 and air heat exchanger for supplying hot water 45 are provided, but a three-way valve may be provided in a branched portion where the pipe is branched into the pipe in which the intermediate heat exchanger 23 and air heat exchanger for supplying hot water 45 are provided.

The hot water circuit 9 is configured by annularly connecting a supply pipe for supplying hot water 51 including a lower part of a hot water tank 50, a pump for circulating water for supplying hot water 52, and a flow rate sensor for water for supplying hot water 54, a heat transfer tube for water for supplying hot water 42b of the utilization-side heat exchanger 42 of the circuit for refrigerant for supplying hot water 6, and a return pipe for supplying hot water 53. The circulation pump 52 is a pump for circulating water within the circuit 9, and the flow rate sensor 54 is a sensor which detects the flow rate of water. In addition, warm water is stored in the hot water tank 50.

The heating medium circuit for collecting solar heat 10 is configured by annularly connecting an in-tank first heat exchanger 61 which radiates heat to the water in the heat storage tank 60, a supply pipe for collecting solar heat 62 including a pump for circulating heating medium for collecting solar heat 63, a solar heat collector 4, and a return pipe for collecting solar heat 64.

The solar heat collector 4 heats the heating medium by solar heat. The circulation pump 63 is a pump which circulates the heating medium within the circuit 10.

The heating medium circuit 7 is configured by annularly connecting an in-tank second heat exchanger 70 which collects heat from the water in the heat storage tank 60 or radiates heat to the water, a first supply pipe 71a, the heat transfer tube for heating medium 23c of the intermediate heat exchanger 23 which exchanges heat between the refrigerant for adjusting air temperature of the circuit for refrigerant for adjusting air temperature 5 and the refrigerant for supplying hot water of the circuit for refrigerant for supplying hot water 6, and a first return pipe 72a including a circulation pump 73. Moreover, a bypass pipe 74 including a bypass valve 75 which connects between the first supply pipe 71a and return pipe 72a is provided.

The bypass valve 75 bypasses a portion of the heating medium whose temperature has been changed by the intermediate heat exchanger 23 within the return pipe 72a to the bypass pipe 74, mixes the portion of the heating medium with the heating medium which has collected heat from or has radiated heat to the water in the heat storage tank 60 in the in-tank second heat exchanger 70, and feeds the heating medium at a desired temperature to the intermediate heat exchanger 23.

It should be noted that the method for adjusting and utilizing the heating medium to an appropriate temperature is not limited to providing a bypass. For example, the method may involve using a pump with a variable flow rate as the pump 73, so that the amount of heat absorbed and radiated can be changed by adjusting the flow velocity of the pump.

The circuit for heating medium for adjusting air temperature 8b which is switched with the circuit for heating medium for adjusting air temperature 8a is configured by annularly connecting the in-tank second heat exchanger 70 which collects heat from the water in the heat storage tank 60 or radiates heat to the water, a second supply pipe 71b, the supply pipe for adjusting air temperature 30, the indoor heat exchanger 31 placed in the indoor unit 2 which exchanges heat with indoor air, a return pipe for adjusting air temperature 32 including the circulation pump for heating medium for adjusting air temperature 33 and flow rate sensor 36, and the second return pipe 72b including the on-off valve 35b. Moreover, a bypass pipe 80 including a bypass valve 81 connecting between the second supply pipe 71b and return pipe 72b is provided.

The bypass valve 81, as the bypass valve 75, bypasses a portion of the heating medium whose temperature has been changed by the indoor heat exchanger 31 within the return pipe 72b to the bypass pipe 80, mixes the portion of the heating medium with the heating medium which has collected heat from or has radiated heat to the water in the heat storage tank 60 in the in-tank second heat exchanger 70, and feeds the heating medium at a desired temperature to the indoor heat exchanger 31.

The hot water feed path 11 includes the hot water tank 50, the heat storage tank 60, a water supply coupling 90 connected to water works outside the hot water/heat storage tank unit 3, a water supply pipe 91 which connects this water supply coupling 90 and a lower part of the hot water tank 50, a first water supply branch pipe 92 which connects this water supply pipe 91 and a lower part of the heat storage tank 60, a hot water supply pipe 93 including a first hot water mixing valve 95 and a second hot water mixing valve 97, a hot water supply coupling 98 connected to this hot water supply pipe 93 and connected to an external hot water supply terminal, a hot water feed pipe 94 connecting an upper part of the hot water tank 60 and the hot water mixing valve 95, and a second water supply branch pipe 96 connecting the water supply pipe 91 and a second hot water mixing valve 97. It should be noted that the heat storage tank, when viewed from the function of heat storage, may not be connected to the hot water feed path 11 and may be provided independently.

The hot water mixing valve 95 mixes the hot water in the hot water tank 50 and the hot water in the heat storage tank 70, while the hot water mixing valve 97 mixes hot water mixed at the hot water mixing valve 95 and water from the second water supply branch pipe 96, and feeds water at a desired temperature from the hot water supply coupling 98.

The air-conditioning hot-water supply system 100 is provided with a plurality of temperature sensors. For example, the circuit for heating medium for adjusting air temperature 8a is provided with temperature sensors 37, 38 which detect the temperatures of an inlet and outlet of the heat transfer tube for heating medium for adjusting air temperature 28b of the utilization-side heat exchanger 28 of the circuit for refrigerant for adjusting air temperature 5. Moreover, the heat transfer tube for refrigerant for adjusting air temperature 28a of the utilization-side heat exchanger 28 is provided with a temperature sensor 39 which detects the temperature of the refrigerant. In addition, the hot water circuit 9 is provided with temperature sensors 55, 56 which detect the temperatures of an inlet and outlet of the heat transfer tube for water for supplying hot water 42b of the utilization-side heat exchanger 42 of the circuit for refrigerant for supplying hot water 6. Furthermore, a temperature sensor 57 which detects the temperature of the refrigerant is provided in the heat transfer tube for refrigerant for supplying hot water 42a of the utilization-side heat exchanger 42 of the circuit for refrigerant for supplying hot water 6, and a temperature sensor 58 which detects the temperature of the refrigerant is provided in the heat transfer tube for refrigerant for supplying hot water 23b of the intermediate heat exchanger 23.

In the heating medium circuit 9, a temperature sensor 76 which detects the temperature of the heating medium from the in-tank second heat exchanger 70, a temperature sensor 77 which detects the supply temperature of the heating medium to the intermediate heat exchanger 23, and a temperature sensor 78 which detects the return temperature of the heating medium from the intermediate heat exchanger 23 are provided.

The intermediate heat exchanger 23 is integrally configured by a portion of the conduit of the circuit for refrigerant for adjusting air temperature 5, a portion of the conduit of the circuit for refrigerant for supplying hot water 6, and a portion of the conduit of the heating medium circuit 7, placed side by side, and can be also referred to as a three-fluid heat exchanger.

The control device 20 inputs signals of each temperature sensor with a remote controller not shown, and controls the compressors 21, 41, four-way valves 22, the expansion valves 24, 27, 43, 44, the circulation pumps 33, 52, 63, 73 and other components based on these signals.

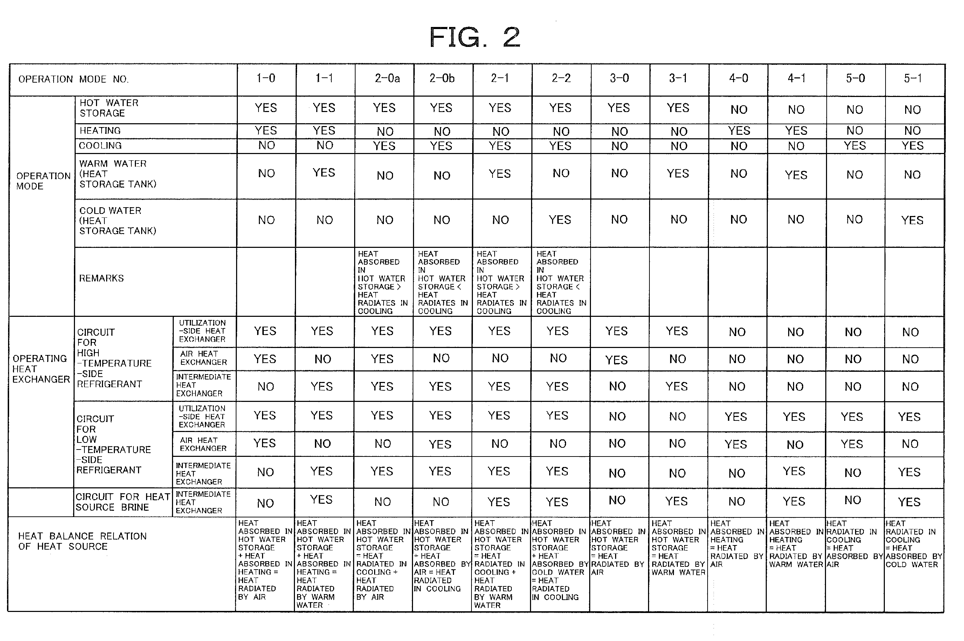

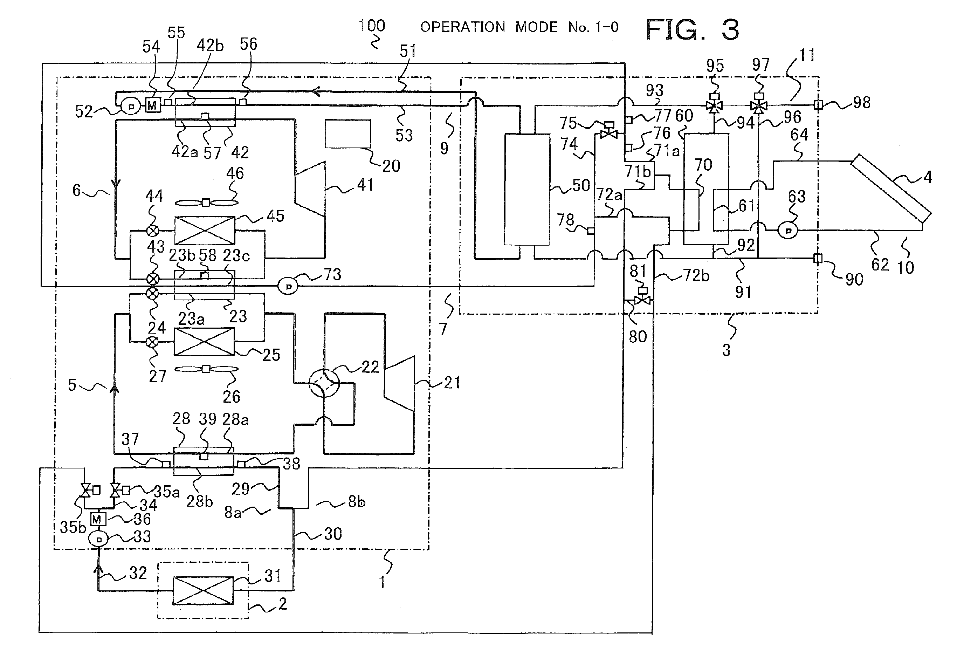

The operations of the hot water supply operation, heating operation and cooling operation of the air-conditioning hot-water supply system 100 configured as mentioned above will be described below. Fig. 2 shows the state table of each operation mode, while Figs. 3 to 14 are system diagrams showing the flow of the refrigerant, water and heating medium of the operation modes.

First, hot water supply/heating operation of <1> operation mode No. 1-0 in Fig. 3 will be described. This mode uses aerothermal energy as a heat source for supplying hot water and heating. Fig. 3 shows the flow of the refrigerant, water and heating medium. At this time, the expansion valve 24 of the circuit for refrigerant for adjusting air temperature 5 and the expansion valve 43 of the circuit for refrigerant for supplying hot water 6 are fully closed to allow no refrigerant to flow. Moreover, the on-off valve 35a of the circuit for heating medium for adjusting air temperature 8a is open to allow the heating medium to flow, and the on-off valve 35b of the circuit for heating medium for adjusting air temperature 8b is closed to allow no heating medium to flow. The heating medium circuit 7 does not operate.

In the circuit for refrigerant for adjusting air temperature 5, the gas refrigerant compressed by the compressor 21 to be at a high temperature and pressure flows into the heat transfer tube for refrigerant for adjusting air temperature 28a of the utilization-side heat exchanger 28 through the four-way valve 22. The gas refrigerant at a high temperature and pressure flowing inside the heat transfer tube for refrigerant for adjusting air temperature 28a is cooled (condensed and liquidized depending on the type of the refrigerant) by the heating medium flowing inside the heat transfer tube for heating medium for adjusting air temperature 28b. This refrigerant at a high pressure is decompressed at the expansion valve 27 to be a low-temperature and low-pressure refrigerant (gas-liquid two-phase refrigerant depending on the type of the refrigerant), and is heated (evaporated depending on the type of the refrigerant) by outdoor air transferred by the fan 26 in the air heat exchanger for adjusting air temperature 25 to be a low-pressure gas refrigerant. This low-pressure gas refrigerant travels through the four-way valve 22 and returns again to the compressor 21.

In the circuit for heating medium for adjusting air temperature 8a, the heating medium delivered by the operation of the circulation pump 33 flows into the heat transfer tube for heating medium for adjusting air temperature 28b of the utilization-side heat exchanger 28 through the pipe 34. The heating medium flowing inside the heat transfer tube for heating medium for adjusting air temperature 28b is heated by the refrigerant at a high temperature flowing inside the heat transfer tube for refrigerant for adjusting air temperature 28a. The heating medium heated to a high temperature is cooled by indoor air in the indoor heat exchanger 31 through the supply pipes 29, 30, to have a lower temperature. At this time, heating is conducted by heating indoor air. The heating medium having a lowered temperature travels through the return pipe 32 and returns again to the circulation pump 33.

In the circuit for refrigerant for supplying hot water 6, the gas refrigerant compressed by the compressor 41 to be at a high temperature and pressure flows into the heat transfer tube for refrigerant for supplying hot water 42a of the utilization-side heat exchanger 42. The gas refrigerant at a high temperature and pressure flowing inside the heat transfer tube for refrigerant for supplying hot water 42a is cooled (condensed and liquidized depending on the type of the refrigerant) by the water flowing inside the heat transfer tube for water for supplying hot water 42b. This high-pressure refrigerant is decompressed at the expansion valve 44 to be a low-temperature and low-pressure refrigerant (gas-liquid two-phase refrigerant depending on the type of the refrigerant), is heated (evaporated depending on the type of the refrigerant) by the outdoor air transferred by the fan 46 in the air heat exchanger for supplying hot water 45, to be a low-pressure gas refrigerant, and returns again to the compressor 41.

In the hot water circuit 9, the water which has flown out from a lower part of the hot water tank 50 by the operation of the circulation pump 52 flows into the heat transfer tube for water for supplying hot water 42b of the utilization-side heat exchanger 42 through the supply pipe 51. The water flowing inside the heat transfer tube for water for supplying hot water 42b is heated by the refrigerant at a high temperature flowing inside the heat transfer tube for refrigerant for supplying hot water 42a, and returned to the upper part of the hot water tank 50 through the return pipe 53, so that water at a high temperature is stored.

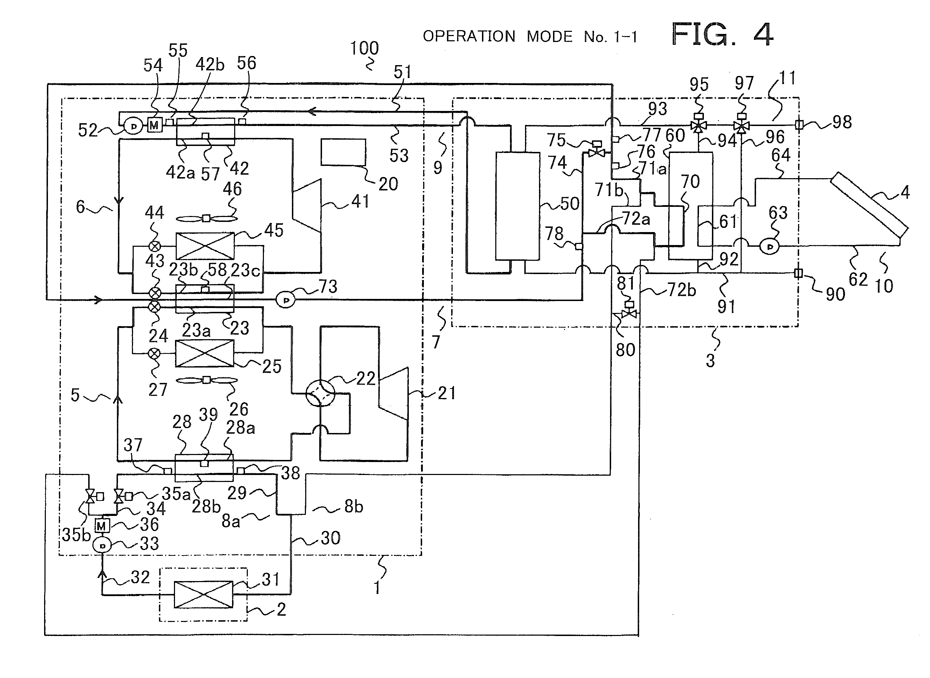

Next, the hot water supply/heating operation of <2> operation mode No. 1-1 in Fig. 4 will be described. In this mode, the intermediate heat exchanger 23 is caused to function as an evaporator of the circuit for refrigerant for adjusting air temperature 5 and also as an evaporator of the circuit for refrigerant for supplying hot water 6, and the heat of the heating medium circulating through the heating medium circuit 7 is given to the refrigerant circulating through the circuit for refrigerant for adjusting air temperature 5 and the circuit for refrigerant for supplying hot water 6 in the intermediate heat exchanger 23, whereby the air-heating operation (that is, cooling operation) by the circuit for refrigerant for adjusting air temperature 5 and the hot water supply operation by the circuit for refrigerant for supplying hot water 6 are performed.

Specifically, the warm water in the heat storage tank 60 is used as a heat source for supplying hot water and heating. It should be noted that the warm water in the heat storage tank 60 is heated by the heating medium circuit for collecting solar heat 10 with solar heat. Fig. 4 shows the flow of the refrigerant, water and heating medium. At this time, the expansion valve 27 of the circuit for refrigerant for adjusting air temperature 5 and the expansion valve 44 of the circuit for refrigerant for supplying hot water 6 are fully closed to allow no refrigerant to flow. Moreover, the on-off valve 35a of the circuit for heating medium for adjusting air temperature 8a is open to allow the heating medium to flow, while the on-off valve 35b of the circuit for heating medium for adjusting air temperature 8b is closed to allow no heating medium to flow

The operation in the circuit for heating medium for adjusting air temperature 8a is the same as that in the aforementioned <1> operation mode No. 1-0.

In the circuit for refrigerant for supplying hot water 6, the gas refrigerant compressed by the compressor 41 to be at a high temperature and pressure flows into the heat transfer tube for refrigerant for supplying hot water 42a of the utilization-side heat exchanger 42. The gas refrigerant at a high temperature and pressure flowing inside the heat transfer tube for refrigerant for supplying hot water 42a is cooled (condensed and liquidized depending on the type of the refrigerant) by the water flowing inside the heat transfer tube for water for supplying hot water 42b. This high-pressure refrigerant is decompressed at the expansion valve 43 to be a low-temperature and low-pressure refrigerant (gas-liquid two-phase refrigerant depending on the type of the refrigerant), is heated (evaporated depending on the type of the refrigerant) by the heating medium flowing inside the heat transfer tube for heating medium 23c in the heat transfer tube for refrigerant for supplying hot water 23b of the intermediate heat exchanger 23 to be a low-pressure gas refrigerant, and returns again to the compressor 41.

The operation in the hot water circuit 9 is the same as that in the aforementioned <1> operation mode No. 1-0.

In the heating medium circuit 7, the heating medium heated in the second heat exchanger 70 in the heat storage tank 60 travels through the supply pipe 71a and flows into the heat transfer tube for heating medium 23c of the intermediate heat exchanger 23 by the operation of the circulation pump 73. The heating medium flowing inside the heat transfer tube for heating medium 23c is cooled by the low-temperature refrigerant flowing inside the heat transfer tube for refrigerant for supplying hot water 23b and inside the heat transfer tube for refrigerant for adjusting air temperature 23a to have a lowered temperature, travels through the return pipe 72a, and returns again to the second heat exchanger 70 in the heat storage tank 60.

Next, the mode of hot water supply/cooling operation will be described. In this mode, the intermediate heat exchanger 23 is caused to function as a condenser of the circuit for refrigerant for adjusting air temperature 5 and also as an evaporator of the circuit for refrigerant for supplying hot water 6, and the heat of the refrigerant circulating through the circuit for refrigerant for adjusting air temperature 5 is given to the refrigerant circulating through the circuit for refrigerant for supplying hot water 6 in the intermediate heat exchanger 23, whereby air cooling operation (that is, cooling operation) by the circuit for refrigerant for adjusting air temperature 5 and the hot water supply operation by the circuit for refrigerant for supplying hot water 6 are performed.

More specifically, a possible configuration is as follows: the air heat exchanger for adjusting air temperature 25 disposed in parallel with the intermediate heat exchanger 23 in the circuit for refrigerant for adjusting air temperature 5 and the air heat exchanger for supplying hot water 45 disposed in parallel with the intermediate heat exchanger 23 in the circuit for refrigerant for supplying hot water 6 are used, and when the amount of heat required in the refrigerant circulating through the circuit for refrigerant for supplying hot water 6 in the intermediate heat exchanger 23 and the amount of heat of the refrigerant circulating through the circuit for refrigerant for adjusting air temperature 5 radiated in the intermediate heat exchanger 23 are not equal, the insufficient heat is supplemented by heat exchange in the air heat exchanger for adjusting air temperature 25 or the air heat exchanger for supplying hot water 45.

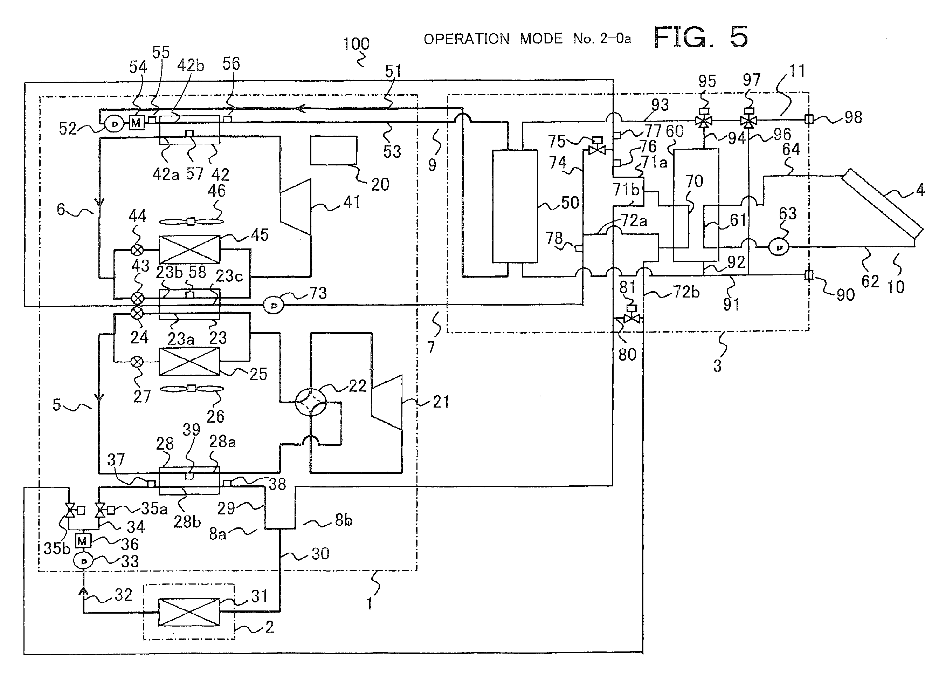

<3> operation mode No. 2-0a in Fig. 5 is a case where the heat source (heat absorption) for supplying hot water is greater than the heat radiated in cooling, and the heat radiated in cooling and aerothermal energy are used as the heat source for supplying hot water. Fig. 5 shows the flow of the refrigerant, water and heating medium. This mode is advantageous in that it can cope with a hot water supply/cooling operation in which the amount of heat absorbed in hot water supply is greater than the amount of heat radiated in cooling.

At this time, the expansion valve 27 of the circuit for refrigerant for adjusting air temperature 5 is fully closed to allow no refrigerant to flow. Moreover, the on-off valve 35a of the circuit for heating medium for adjusting air temperature 8a is open to allow the heating medium to flow, while the on-off valve 35b of the circuit for heating medium for adjusting air temperature 8b is closed to allow no heating medium to flow. The heating medium circuit 7 does not operate.

In the circuit for refrigerant for adjusting air temperature 5, the gas refrigerant compressed by the compressor 21 to be at a high temperature and pressure travels through the four-way valve 22 and flows into the heat transfer tube for refrigerant for adjusting air temperature 23a of the intermediate heat exchanger 23. The gas refrigerant at a high temperature and pressure flowing inside the heat transfer tube for refrigerant for adjusting air temperature 23a is cooled (condensed and liquidized depending on the type of the refrigerant) by the low-temperature refrigerant flowing inside the heat transfer tube for hot water supply 23b. This high-pressure refrigerant is decompressed at the expansion valve 24 to be a low-temperature and low-pressure refrigerant (gas-liquid two-phase refrigerant depending on the type of the refrigerant), and flows into the heat transfer tube for refrigerant for adjusting air temperature 28a of the utilization-side heat exchanger 28. The gas-liquid two-phase refrigerant flowing inside the heat transfer tube for refrigerant for adjusting air temperature 28a is heated (evaporated depending on the type of the refrigerant) by the high-temperature heating medium flowing inside the heat transfer tube for heating medium for adjusting air temperature 28b to be a low-pressure gas refrigerant. This low-pressure gas refrigerant travels through the four-way valve 22 and returns again to the compressor 21.

In the circuit for heating medium for adjusting air temperature 8a, the heating medium delivered by the operation of the circulation pump 33 travels through the pipe 34 and flows into the heat transfer tube for heating medium for adjusting air temperature 28b of the utilization-side heat exchanger 28. The heating medium flowing inside the heat transfer tube for heating medium for adjusting air temperature 28b is cooled by the low-temperature refrigerant flowing inside the heat transfer tube for refrigerant for adjusting air temperature 28a, to have a lower temperature. The heating medium having a lowered temperature travels through the supply pipes 29, 30, and is heated by indoor air in the indoor heat exchanger 31 to be heated. At this time, cooling is conducted by cooling indoor air. The heating medium heated to a high temperature travels through the return pipe 32 and returns again to the circulation pump 33.

In the circuit for refrigerant for supplying hot water 6, the gas refrigerant compressed by the compressor 41 to be at a high temperature and pressure flows into the heat transfer tube for refrigerant for supplying hot water 42a of the utilization-side heat exchanger 42. The gas refrigerant at a high temperature and pressure flowing inside the heat transfer tube for refrigerant for supplying hot water 42a is cooled (condensed and liquidized depending on the type of the refrigerant) by the water flowing inside the heat transfer tube for water for supplying hot water 42b. This high-pressure refrigerant is decompressed at the expansion valves 43 and 44. At this time, the expansion valves 43, 44 adjust the flow rate ratio of the refrigerant flowing through the intermediate heat exchanger 23 to the refrigerant flowing through the air heat exchanger for supplying hot water 45. The refrigerant (the gas-liquid two-phase refrigerant depending on the type of the refrigerant) which has been decompressed at the expansion valve 43 to be at low temperature and pressure is heated by the high-temperature refrigerant flowing inside the heat transfer tube for refrigerant for adjusting air temperature 23a in the heat transfer tube for refrigerant for supplying hot water 23b of the intermediate heat exchanger 23 to evaporate, to be a low-pressure gas refrigerant. In contrast, the refrigerant which has been decompressed at the expansion valve 44 to be a low-temperature and low-pressure refrigerant, is heated (evaporated depending on the type of the refrigerant) by the outdoor air transferred by the fan 46 in the air heat exchanger for supplying hot water 45 to be a low-pressure gas refrigerant. The gas refrigerant which has exited the intermediate heat exchanger 23 and air heat exchanger returns again to the compressor 41. At this time, exhaust heat of cooling and aerothermal energy are used as the heat source for supplying hot water.

The operation in the hot water circuit 9 is the same as that in the aforementioned <1> operation mode No. 1-0.

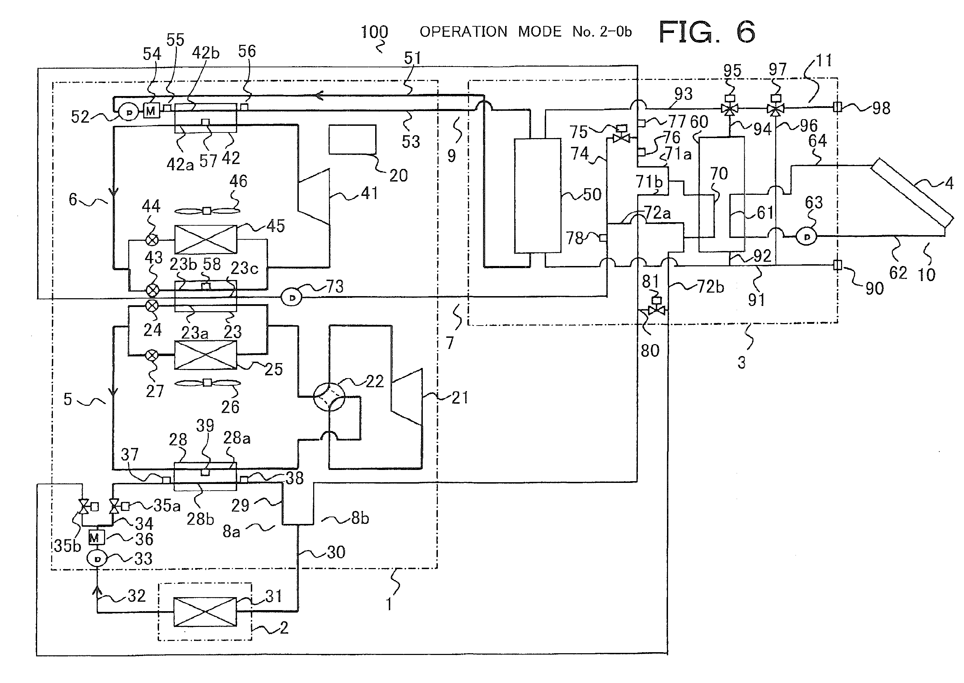

<4> operation mode No. 2-0b in Fig. 6 is a case where the heat source (heat absorption) necessary to supply hot water is smaller than the heat radiated in cooling, and an excessive heat radiated in cooling is absorbed by air. Fig. 6 shows the flow of the refrigerant, water and heating medium. At this time, the expansion valve 44 of the circuit for refrigerant for supplying hot water 6 is fully closed to allow no refrigerant to flow. Moreover, the on-off valve 35a of the circuit for heating medium for adjusting air temperature 8a is open to allow the heating medium to flow, while the on-off valve 35b of the circuit for heating medium for adjusting air temperature 8b is closed to allow no heating medium to flow. The heating medium circuit 7 does not operate.

In the circuit for refrigerant for adjusting air temperature 5, the gas refrigerant compressed by the compressor 21 to be at a high temperature and pressure travels through the four-way valve 22, and flows into the heat transfer tube for refrigerant for adjusting air temperature 23a of the intermediate heat exchanger 23 and the air heat exchanger for adjusting air temperature 25. The gas refrigerant at a high temperature and pressure which has flown into the heat transfer tube for refrigerant for adjusting air temperature 23a is cooled (condensed and liquidized depending on the type of the refrigerant) by the low-temperature refrigerant flowing inside the heat transfer tube for hot water supply 23b. In contrast, the gas refrigerant at a high temperature and pressure which has flown into the air heat exchanger for adjusting air temperature 25 is cooled by the outdoor air transferred by the fan 25, condensed and liquidized. The high-pressure refrigerant which has exited the intermediate heat exchanger 23 and the air heat exchanger for adjusting air temperature 25 is decompressed at the expansion valves 24 and 27, respectively, to be the low-temperature and low-pressure refrigerant (the gas-liquid two-phase refrigerant depending on the type of the refrigerant). At this time, the expansion valves 24, 25 adjust the flow rate ratio of the refrigerant flowing through the intermediate heat exchanger 23 to the refrigerant flowing through the air heat exchanger for adjusting air temperature 25. The low-temperature and low-pressure refrigerant flows into the heat transfer tube for refrigerant for adjusting air temperature 28a of the utilization-side heat exchanger 28, and is heated (evaporated depending on the type of the refrigerant) by the high-temperature heating medium flowing inside the heat transfer tube for heating medium for adjusting air temperature 28b to be a low-pressure gas refrigerant. This low-pressure gas refrigerant travels through the four-way valve 22, and returns again to the compressor 21. At this time, extra heat radiated in cooling which is not utilized as the heat source for supplying hot water is absorbed by air.

The operation of the circuit for heating medium for adjusting air temperature 8a is the same as that in the aforementioned <3> operation mode No. 2-0a.

In the circuit for refrigerant for supplying hot water 6, the gas refrigerant compressed by the compressor 41 to be at a high temperature and pressure flows into the heat transfer tube for refrigerant for supplying hot water 42a of the utilization-side heat exchanger 42. The gas refrigerant at a high temperature and pressure flowing inside the heat transfer tube for refrigerant for supplying hot water 42a is cooled (condensed and liquidized depending on the type of the refrigerant) by the water flowing inside the heat transfer tube for water for supplying hot water 42b. This high-pressure refrigerant is decompressed at the expansion valve 43, and the resulting low-temperature and low-pressure refrigerant (the gas-liquid two-phase refrigerant depending on the type of the refrigerant) is heated (evaporated depending on the type of the refrigerant) by the high-temperature refrigerant flowing inside the heat transfer tube for refrigerant for adjusting air temperature 23a in the heat transfer tube for refrigerant for supplying hot water 23b of the intermediate heat exchanger 23. The resulting low-pressure gas refrigerant returns again to the compressor 41. At this time, exhaust heat of cooling is used as the heat source for supplying hot water.

The operation in the hot water circuit 9 is the same as that in the aforementioned <1> operation mode No. 1-0.

Moreover, another possible mode of hot water supply/cooling operation other than the above is as follows: when the amount of heat required for the refrigerant circulating through the circuit for refrigerant for supplying hot water 6 in the intermediate heat exchanger 23 and the amount of heat radiated in the intermediate heat exchanger 23 of the refrigerant circulating through the circuit for refrigerant for adjusting air temperature 5 are not equal, the insufficient heat is supplemented by heat exchange with the heating medium circulating through the heating medium circuit 7.

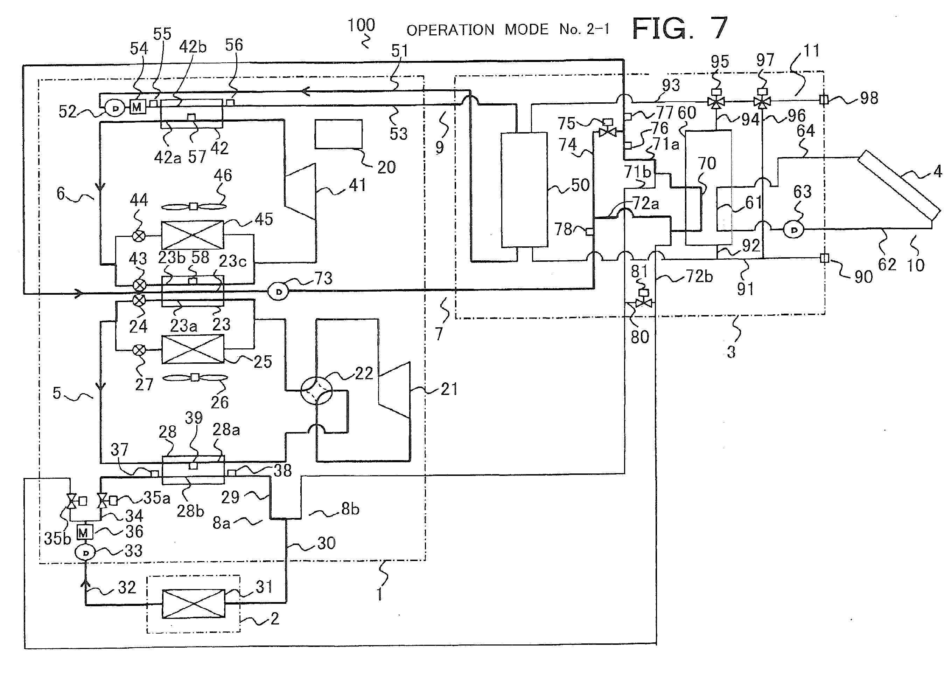

<5> operation mode No. 2-1 in Fig. 7 is a case where the heat source (heat absorption) for supplying hot water is greater than the heat radiated in cooling, and the heat radiated in cooling and the warm water in the heat storage tank 60 are used as the heat source for supplying hot water. This mode is advantageous in that it can cope with a hot water supply/cooling operation in which the amount of heat absorbed in hot water supply is greater than the amount of heat radiated in cooling.

Moreover, in this mode, warm water is used instead of the aerothermal energy in <3> operation mode No. 2-0a. The warm water in the heat storage tank 60 is that heated by the heating medium circuit for collecting solar heat 10 with solar heat. Fig. 7 shows the flow of the refrigerant, water and heating medium. At this time, the expansion valve 27 of the circuit for refrigerant for adjusting air temperature 5 and the expansion valve 43 of the circuit for refrigerant for supplying hot water 6 are fully closed to allow no refrigerant to flow. Moreover, the on-off valve 35a of the circuit for heating medium for adjusting air temperature 8a is open to allow the heating medium to flow, while the on-off valve 35b of the circuit for heating medium for adjusting air temperature 8b is closed to allow no heating medium to flow.

The operations of the circuit for refrigerant for adjusting air temperature 5 and the circuit for heating medium for adjusting air temperature 8a are the same as that in the aforementioned <3> operation mode No. 2-0a.

In the circuit for refrigerant for supplying hot water 6, the gas refrigerant compressed by the compressor 41 to be at a high temperature and pressure flows into the heat transfer tube for refrigerant for supplying hot water 42a of the utilization-side heat exchanger 42. The gas refrigerant at a high temperature and pressure flowing inside the heat transfer tube for refrigerant for supplying hot water 42a is cooled (condensed and liquidized depending on the type of the refrigerant) by the water flowing inside the heat transfer tube for water for supplying hot water 42b. This high-pressure refrigerant is decompressed at the expansion valve 43. The resulting low-temperature and low-pressure refrigerant (gas-liquid two-phase refrigerant depending on the type of the refrigerant) is heated (evaporated depending on the type of the refrigerant) by the high-temperature refrigerant flowing inside the heat transfer tube for refrigerant for adjusting air temperature 23a and the high-temperature heating medium flowing inside the heat transfer tube for heating medium 23c in the heat transfer tube for refrigerant for supplying hot water 23b of the intermediate heat exchanger 23. The resulting low-pressure gas refrigerant returns again to the compressor 41. At this time, exhaust heat of cooling and warm water are used as the heat source for supplying hot water.

The operation in the hot water circuit 9 is the same as that in the aforementioned <1> operation mode No. 1-0.

In the heating medium circuit 7, the heating medium heated in the second heat exchanger 70 in the heat storage tank 60 travels through the supply pipe 71a and flows into the heat transfer tube for heating medium 23c of the intermediate heat exchanger 23 by the operation of the circulation pump 73. The heating medium flowing inside the heat transfer tube for heating medium 23c is cooled by the low-temperature refrigerant flowing inside flowing inside the heat transfer tube for refrigerant for supplying hot water 23b to have a lowered temperature, travels through the return pipe 72a, and returns again to the second heat exchanger 70 in the heat storage tank 60.

It should be noted that this <5> operation mode No. 2-1 is such a mode that the low-pressure-side refrigerant of the circuit for refrigerant for supplying hot water 6 absorbs heat, and therefore the temperature of the water in the heat storage tank 60 needs to be higher than the temperature (that is, evaporation temperature) of the low-pressure-side refrigerant.

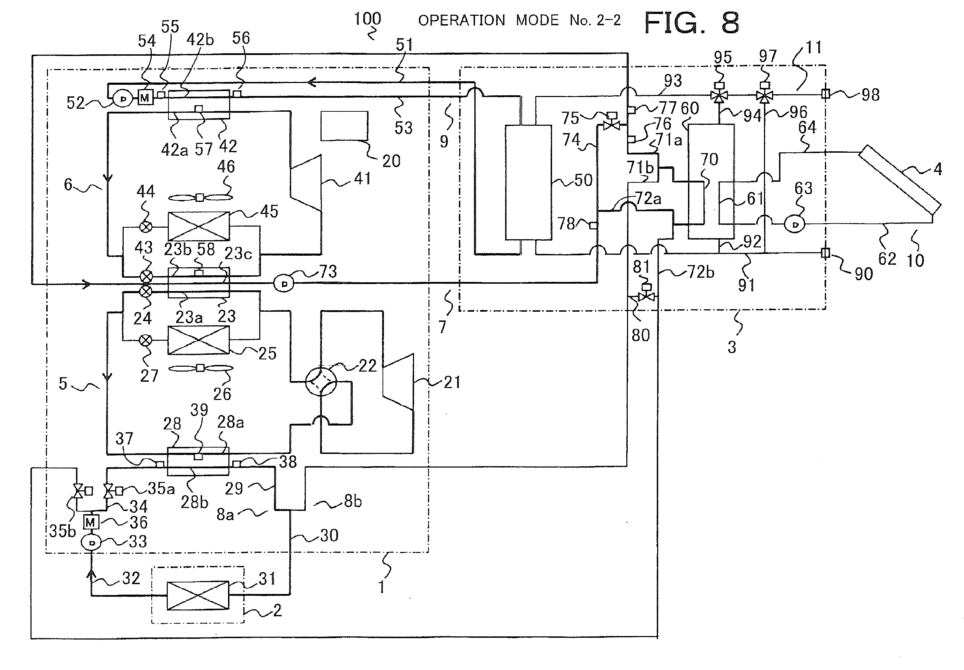

<6> operation mode No. 2-2 in Fig. 8 is a case where the heat source (heat absorption) necessary to supply hot water is smaller than the heat radiated in cooling, and excessive heat radiated in cooling is absorbed by the cold water in the heat storage tank 60. In this mode, heat is absorbed by cold water, instead of by the air in <4> operation mode No. 2-0b.

Herein, the cold water in the heat storage tank 60 is that cooled in the hot water supply operation in <8> operation mode No. 3-1 described later. For example, it is preferable to perform <8> operation mode No. 3-1 during the night to perform a hot water supply operation and produce cold water at the same time, and utilize this cold heat in performing a hot water supply/cooling operation of <6> operation mode No. 2-2 during the day.

Fig. 8 shows the flow of the refrigerant, water and heating medium. At this time, the expansion valve 27 of the circuit for refrigerant for adjusting air temperature 5 and the expansion valve 43 of the circuit for refrigerant for supplying hot water 6 are fully closed to allow no refrigerant to flow. Moreover, the on-off valve 35a of the circuit for heating medium for adjusting air temperature 8a is open to allow the heating medium to flow, while the on-off valve 35b of the circuit for heating medium for adjusting air temperature 8b is closed to allow no heating medium to flow.

It should be noted that in this <6> operation mode No. 2-2, since the refrigerant for supplying hot water of the circuit for refrigerant for adjusting air temperature 5 radiates heat, the temperature of the water in the heat storage tank 60 needs to be lower than the temperature (condensing temperature) of the refrigerant for supplying hot water.

In the circuit for refrigerant for adjusting air temperature 5, the gas refrigerant compressed by the compressor 21 to be at a high temperature and pressure travels through the four-way valve 22, and flows into the heat transfer tube for refrigerant for adjusting air temperature 23a of the intermediate heat exchanger 23. The gas refrigerant at a high temperature and pressure flowing inside the heat transfer tube for refrigerant for adjusting air temperature 23a is cooled (condensed and liquidized depending on the type of the refrigerant) by the low-temperature refrigerant flowing inside the heat transfer tube for hot water supply 23b and the low-temperature heating medium flowing inside the heat transfer tube for heating medium 23c. This high-pressure refrigerant is decompressed at the expansion valve 24. The resulting low-temperature and low-pressure refrigerant (gas-liquid two-phase refrigerant depending on the type of the refrigerant) flows into the heat transfer tube for refrigerant for adjusting air temperature 28a of the utilization-side heat exchanger 28. The refrigerant flowing inside the heat transfer tube for refrigerant for adjusting air temperature 28a is heated (evaporated depending on the type of the refrigerant) by the high-temperature heating medium flowing inside the heat transfer tube for heating medium for adjusting air temperature 28b to be a low-pressure gas refrigerant. This low-pressure gas refrigerant travels through the four-way valve 22, and returns again to the compressor 21. At this time, excessive heat radiated in cooling which is not utilized as the heat source for supplying hot water is absorbed by cold water.

The operation in the circuit for heating medium for adjusting air temperature 8a is the same as that in the aforementioned <1> operation mode No. 1-0.

Moreover, the operations of the circuit for refrigerant for supplying hot water 6 and the hot water circuit 9 are the same as the case of the aforementioned <4> operation mode No. 2-0b.

In the heating medium circuit 7, the heating medium cooled in the second heat exchanger 70 in the heat storage tank 60 travels through the supply pipe 71a, and flows into the heat transfer tube for heating medium 23c of the intermediate heat exchanger 23 by the operation of the circulation pump 73. The heating medium flowing through the heat transfer tube for heating medium 23c is heated by the high-temperature refrigerant flowing inside the heat transfer tube for refrigerant for adjusting air temperature 23a to have a raised temperature, travels through the return pipe 72a, and returns again to the second heat exchanger 70 in the heat storage tank 60.

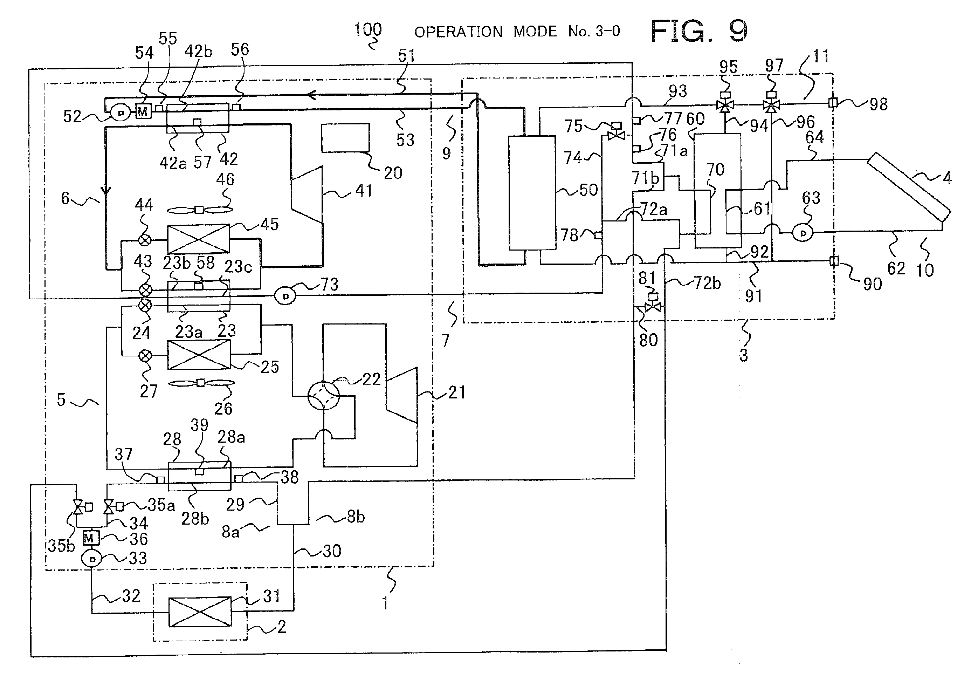

Next, the hot water supply operation in <7> operation mode No. 3-0 in Fig. 9 will be described. In this mode, aerothermal energy is used as the heat source for supplying hot water. Fig. 9 shows the flow of refrigerant and water. At this time, the expansion valve 43 of the circuit for refrigerant for supplying hot water 6 is fully closed to allow no refrigerant to flow. The circuit for refrigerant for adjusting air temperature 5, the circuits for heating medium adjusting air temperature 8a, 8b, and the heating medium circuit 7 do not operate.

The operations in the circuit for refrigerant for supplying hot water 6 and the hot water circuit 9 are the same as that in the aforementioned <1> operation mode No. 1-0.

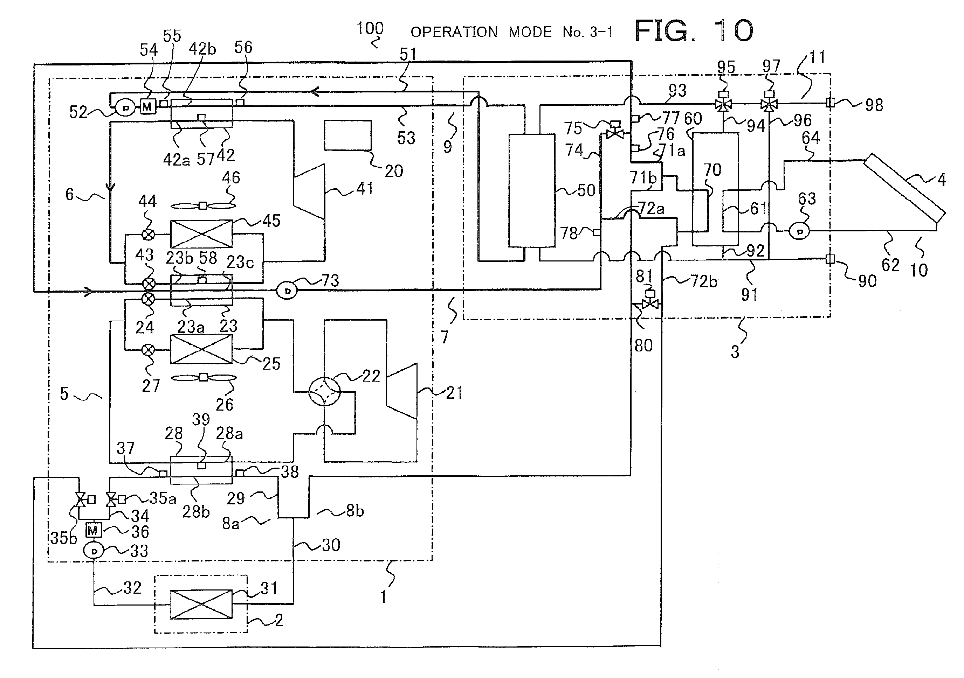

Next, the hot water supply operation in <8> operation mode No. 3-1 in Fig. 10 will be described. In this mode, the intermediate heat exchanger 23 is caused to function as an evaporator of the circuit for refrigerant for supplying hot water 6, and the heat of the heating medium circulating through the heating medium circuit 7 is given to the refrigerant circulating through the circuit for refrigerant for supplying hot water 6 in the intermediate heat exchanger 23, to perform a hot water supply operation.

Specifically, the warm water in the heat storage tank 60 is used as a heat source for the hot water supply operation. Fig. 10 shows the flow of the refrigerant, water and heating medium. At this time, the expansion valve 44 of the circuit for refrigerant for supplying hot water 6 is fully closed to allow no refrigerant to flow. The circuit for refrigerant for adjusting air temperature 5 and the circuits for heating medium adjusting air temperature 8a, 8b do not operate.

The operations in the circuit for refrigerant for supplying hot water 6 and the hot water circuit 9 are the same as that in the case of the aforementioned <2> operation mode No. 1-1.

It should be noted that the hot water supply operation in <8> operation mode No. 3-1 is preferably used when the following relationship holds, considering the energy efficiency: (the output temperature in the hot water tank 50) > (the temperature of the water in the heat storage tank 60) > (outside air temperature).

In the heating medium circuit 7, the heating medium heated in the second heat exchanger 70 in the heat storage tank 60 travels through the supply pipe 71a and flows into the heat transfer tube for heating medium 23c of the intermediate heat exchanger 23 by the operation of the circulation pump 73. The heating medium flowing inside the heat transfer tube for heating medium 23c is cooled by the low-temperature refrigerant flowing inside the heat transfer tube for refrigerant for supplying hot water 23b to have a lowered temperature, travels through the return pipe 72a, and returns again to the second heat exchanger 70 in the heat storage tank 60. In this mode, the water in the heat storage tank 60 is cooled, resulting in cold water.

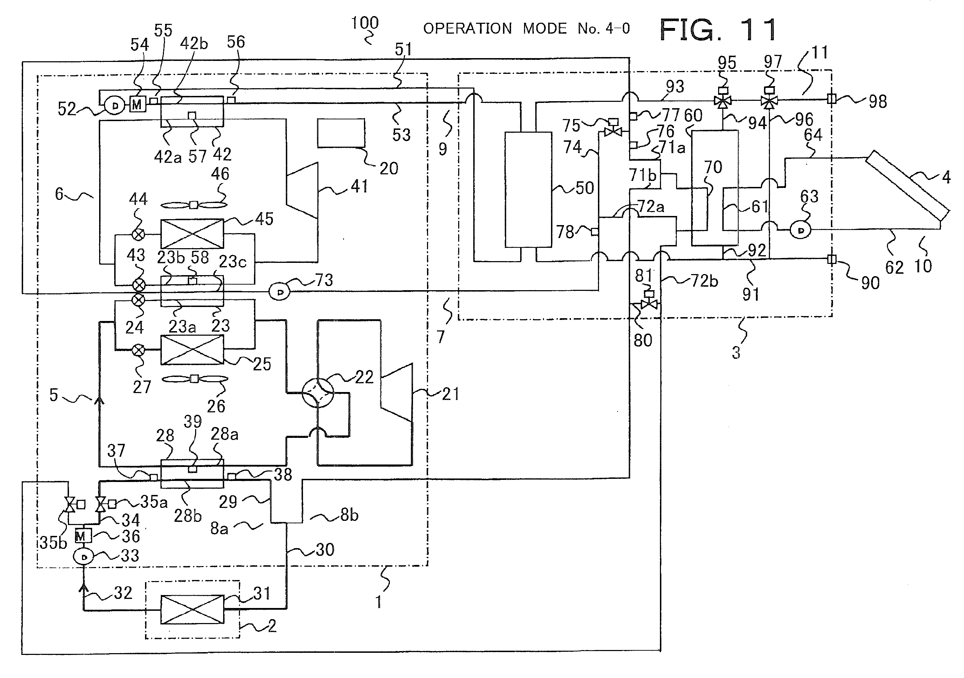

Next, the heating operation in <9> operation mode No. 4-0 in Fig. 11 will be described. In this mode, aerothermal energy is used as a heat source of heating. Fig. 11 shows the flow of the refrigerant and heating medium. At this time, the expansion valve 24 of the circuit for refrigerant for adjusting air temperature 6 is fully closed to allow no refrigerant to flow. Moreover, the on-off valve 35a of the circuit for heating medium for adjusting air temperature 8a is open to allow the heating medium to flow, while the on-off valve 35b of the circuit for heating medium for adjusting air temperature 8b is closed to allow no heating medium to flow. The circuit for refrigerant for supplying hot water 6, the hot water circuit 9, and the heating medium circuit 7 do not operate.

The operations in the circuit for refrigerant for adjusting air temperature 5 and circuit for heating medium for supplying hot water 8a are the same as that in the case of the aforementioned <1> operation mode No. 1-0.

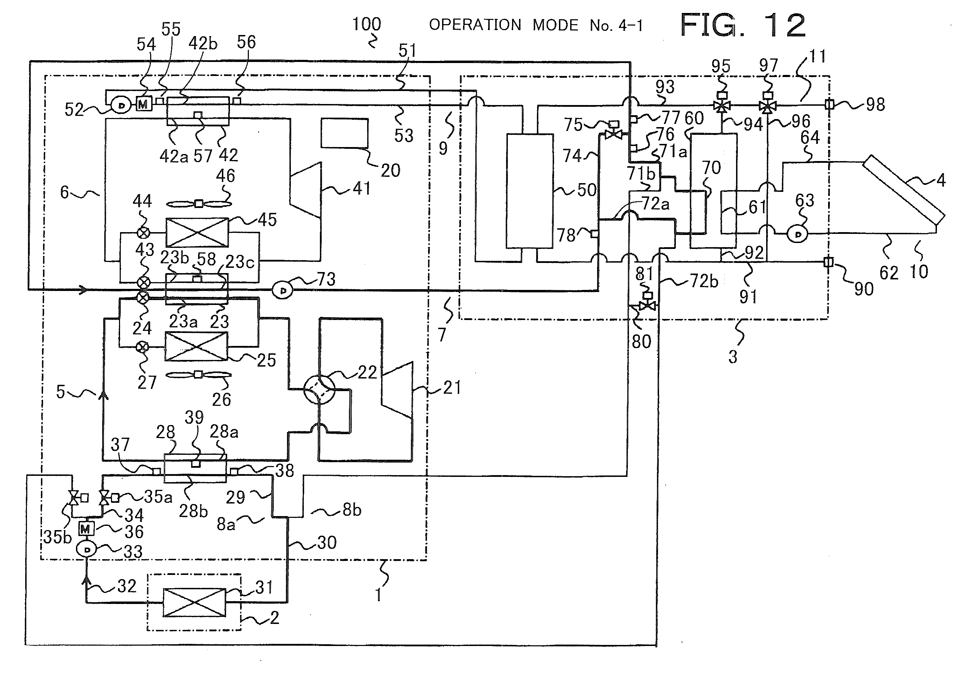

Next, the heating operation in <10> operation mode No. 4-1 in Fig. 12 will be described. In this mode, the intermediate heat exchanger 23 is caused to function as an evaporator of the circuit for refrigerant for adjusting air temperature 5, and the heat of the heating medium circulating through the heating medium circuit 7 is given to the refrigerant circulating through the circuit for refrigerant for adjusting air temperature 5 in the intermediate heat exchanger 23, whereby the air-heating operation (that is, heating operation) by the circuit for refrigerant for adjusting air temperature is performed.

More specifically, the warm water in the heat storage tank 60 is used as a heat source of heating. Fig. 12 shows the flow of the refrigerant and heating medium. At this time, the expansion valve 27 of the circuit for refrigerant for adjusting air temperature 6 is fully closed to allow no refrigerant to flow. Moreover, the on-off valve 35a of the circuit for heating medium for adjusting air temperature 8a is open to allow the heating medium to flow, while the on-off valve 35b of the circuit for heating medium for adjusting air temperature 8b is closed to allow no heating medium to flow. The circuit for refrigerant for supplying hot water 6 and the hot water circuit 9 do not operate.

The operations in the circuit for refrigerant for adjusting air temperature 5 and circuit for heating medium for supplying hot water 8a are the same as that in the case of the aforementioned <2> operation mode No. 1-1.

In the heating medium circuit 7, the heating medium heated in the second heat exchanger 70 in the heat storage tank 60 travels through the supply pipe 71a, and flows into the heat transfer tube for heating medium 23c of the intermediate heat exchanger 23 by the operation of the circulation pump 73. The heating medium flowing inside the heat transfer tube for heating medium 23c is cooled by the low-temperature refrigerant flowing inside the heat transfer tube for refrigerant for adjusting air temperature 23a to have a lowered temperature, travels through the return pipe 72a, and returns again to the second heat exchanger 70 in the heat storage tank 60.

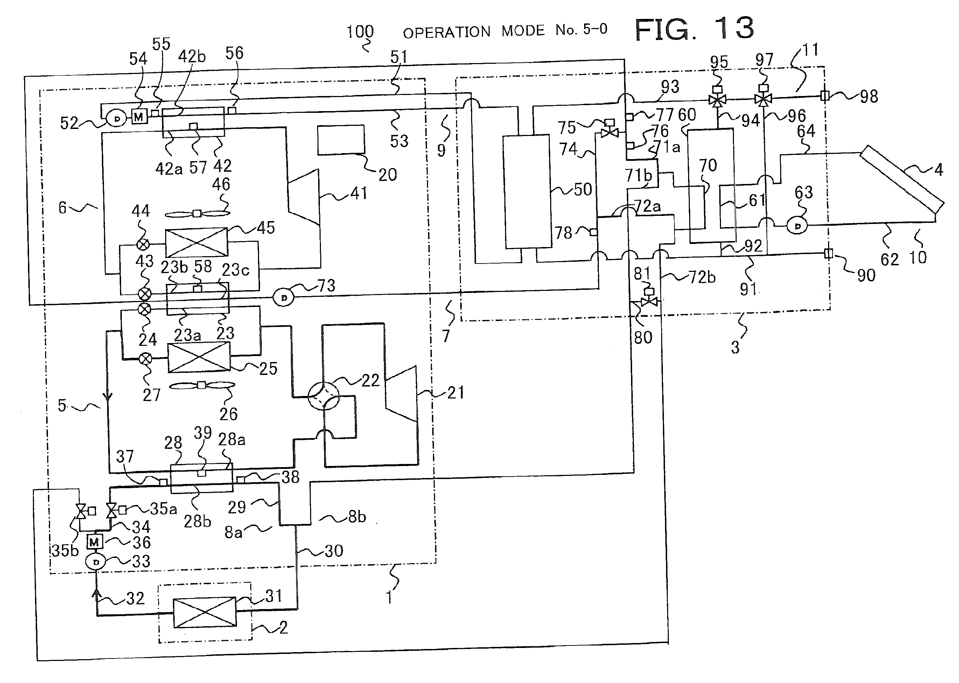

Next, the cooling operation in <11> operation mode No. 5-0 in Fig. 13 will be described. In this mode, heat radiated in cooling is absorbed by air. Fig. 13 shows the flow of the refrigerant and heating medium. At this time, the expansion valve 24 of the circuit for refrigerant for adjusting air temperature 6 is fully closed to allow no refrigerant to flow. Moreover, the on-off valve 35a of the circuit for heating medium for adjusting air temperature 8a is open to allow the heating medium to flow, while the on-off valve 35b of the circuit for heating medium for adjusting air temperature 8b is closed to allow no heating medium to flow. The circuit for refrigerant for supplying hot water 6, the hot water circuit 9, and the heating medium circuit 7 do not operate.

In the circuit for refrigerant for adjusting air temperature 5, the gas refrigerant compressed by the compressor 21 to be at a high temperature and pressure travels through the four-way valve 22, and flows into the air heat exchanger for adjusting air temperature 25. The gas refrigerant at a high temperature and pressure which has flown into the air heat exchanger for adjusting air temperature 25 is cooled (condensed and liquidized depending on the type of the refrigerant) by the outdoor air transferred by the fan 25. This refrigerant at a high pressure is decompressed at the expansion valve 27. The resulting low-temperature and low-pressure refrigerant (gas-liquid two-phase refrigerant depending on the type of the refrigerant) flows into the heat transfer tube for refrigerant for adjusting air temperature 28a of the utilization-side heat exchanger 28, and is heated (evaporated depending on the type of the refrigerant) by the high-temperature heating medium flowing inside the heat transfer tube for heating medium for adjusting air temperature 28b to be a low-pressure gas refrigerant. This low-pressure gas refrigerant travels through the four-way valve 22 and returns again to the compressor 21.

The operation of the circuit for heating medium for adjusting air temperature 8a is the same as that in the aforementioned <3> operation mode No. 2-0a.

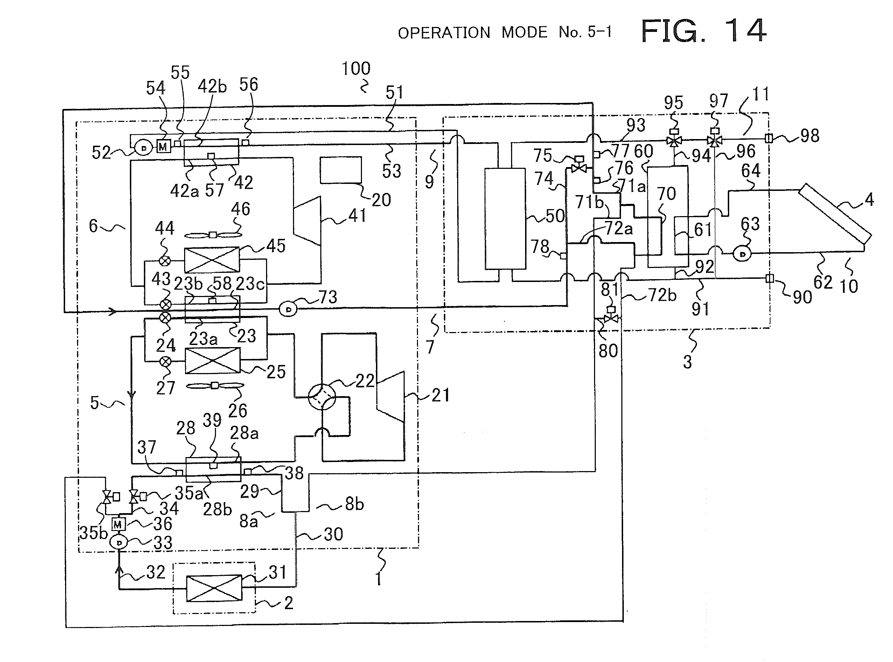

Next, the cooling operation in <12> operation mode No. 5-1 in Fig. 14 will be described. In this mode, the intermediate heat exchanger 23 is caused to function as a condenser of the circuit for refrigerant for adjusting air temperature 5, and the cold heat of the heating medium circulating through the heating medium circuit 7 is given to the refrigerant circulating through the circuit for refrigerant for adjusting air temperature 5 in the intermediate heat exchanger 23, whereby the air cooling operation (that is, cooling operation) by the circuit for refrigerant for adjusting air temperature 5 is performed.

More specifically, the heat radiated in cooling is absorbed by cold water in the heat storage tank 60. Herein, the cold water in the heat storage tank 60 is that cooled in the aforementioned hot water supply operation in <8> operation mode No. 3-1. The cold heat generated in the hot water supply operation is used as the cold heat source during the cooling operation by shifting the time. That is, for example, it is preferable to perform <8> operation mode No. 3-1 during the night, to supply hot water and produce cold water at night, and utilize this cold heat in performing the cooling operation of the <12> operation mode No. 5-1 during the day.

Fig. 14 shows the flow of the refrigerant and heating medium. At this time, the expansion valve 27 of the circuit for refrigerant for adjusting air temperature 6 is fully closed to allow no refrigerant to flow. The circuit for refrigerant for supplying hot water 6 and the hot water circuit 9 do not operate.

In the circuit for refrigerant for adjusting air temperature 5, the gas refrigerant compressed by the compressor 21 to be at a high temperature and pressure travels through the four-way valve 22, and flows into the heat transfer tube for refrigerant for adjusting air temperature 23a of the intermediate heat exchanger 23. The gas refrigerant at a high temperature and pressure flowing inside the heat transfer tube for refrigerant for adjusting air temperature 23a is cooled (condensed and liquidized depending on the type of the refrigerant) by the low-temperature heating medium flowing inside the heat transfer tube for heating medium 23c. This high-pressure refrigerant is decompressed at the expansion valve 24. The resulting low-temperature and low-pressure refrigerant (gas-liquid two-phase refrigerant depending on the type of the refrigerant) flows into the heat transfer tube for refrigerant for adjusting air temperature 28a of the utilization-side heat exchanger 28, and is heated (evaporated depending on the type of the refrigerant) by the high-temperature heating medium flowing inside the heat transfer tube for heating medium for adjusting air temperature 28b to be a low-pressure gas refrigerant. This low-pressure gas refrigerant travels through the four-way valve 22 and returns again to the compressor 21.

The operation of the circuit for heating medium for adjusting air temperature 8a is the same as that in the aforementioned <3> operation mode No. 2-0a.

In the heating medium circuit 7, the heating medium cooled in the second heat exchanger 70 in the heat storage tank 60 travels through the supply pipe 71a, and flows into the heat transfer tube for heating medium 23c of the intermediate heat exchanger 23 by the operation of the circulation pump 73. The heating medium flowing inside the heat transfer tube for heating medium 23c is heated by the high-temperature refrigerant flowing inside the heat transfer tube for refrigerant for adjusting air temperature 23a to have a raised temperature, travels through the return pipe 72a, and returns again to the second heat exchanger 70 in the heat storage tank 60.

As described above, according to the above-described constitution, the heating medium circuit can store the heat (heat or cold heat) of the refrigerant circulating through the circuit for refrigerant for adjusting air temperature and the circuit for refrigerant for supplying hot water. Therefore, not only when the circuits are simultaneously operated, but also when the circuits are operated at different times, the exhaust heat of the circuit for refrigerant for adjusting air temperature and circuit for refrigerant for supplying hot water can be effectively utilized, thereby obtaining high energy efficiency.

Moreover, the heat obtained by the solar heat collector can be utilized as the heat source for hot water supply and air conditioning, and therefore high energy efficiency can be obtained. Estimated by calculation, power consumption can be reduced by 40% per year.

Moreover, when only hot water supply operation is performed, the circuit for refrigerant for adjusting air temperature needs not be operated and only the circuit for refrigerant for supplying hot water needs to be operated, and therefore excessive energy consumption can be reduced.

Moreover, when the amount of heat absorbed in hot water supply is greater than the amount of the heat radiated in cooling during hot water supply/cooling operation, aerothermal energy can be utilized by the air heat exchanger of the circuit for refrigerant for supplying hot water, and therefore operation is enabled regardless of the amount of heat absorbed in hot water supply and the amount of heat radiated in cooling.

Moreover, since the intermediate heat exchanger 23 is a three-fluid heat exchanger which is integrally configured by the heat transfer tube for refrigerant for adjusting air temperature 23a, the heat transfer tube for refrigerant for supplying hot water 23b, and the heat transfer tube for heating medium 23c in a manner of being in thermal contact with each other, the number of heat exchangers can be reduced than in the case where it is provided with a two-fluid heat exchanger including a heat transfer tube for refrigerant for supplying hot water and a heat transfer tube for refrigerant for supplying hot water, a two-fluid heat exchanger including a heat transfer tube for refrigerant for supplying hot water and a heat transfer tube for heating medium, and a two-fluid heat exchanger including a heat transfer tube for refrigerant for adjusting air temperature and a heat transfer tube for heating medium, thereby reducing costs and equipment volumes.

Moreover, a plurality of operation modes which can effectively utilize the heat/cold sources such as the exhaust cold heat of the refrigerant circuit and solar heat are provided, whereby high energy efficiency can be obtained.

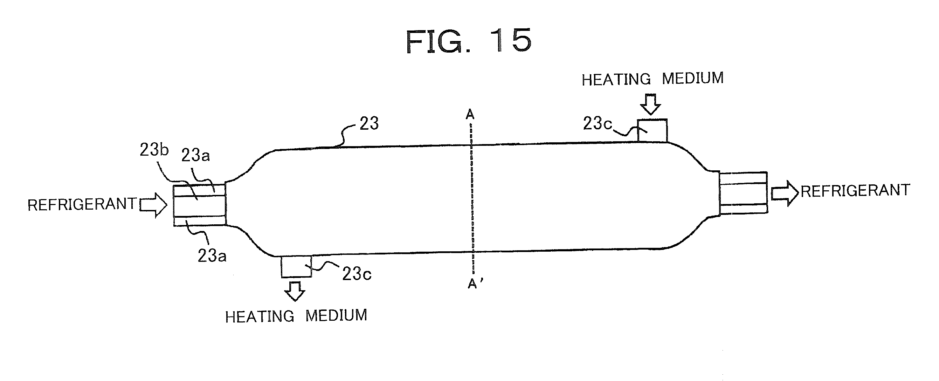

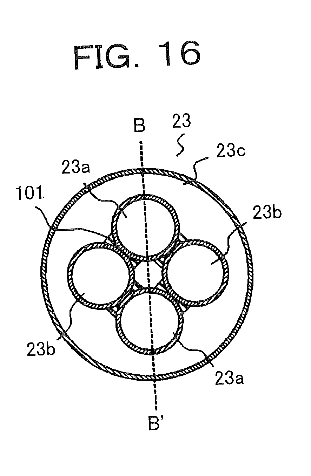

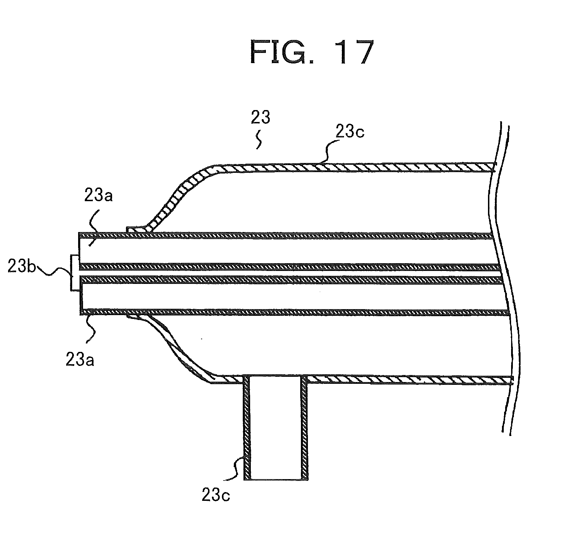

Next, the intermediate heat exchanger 23 according to the first embodiment of the present invention will be described with reference to Figs. 15 to 17. Fig. 15 is an illustrative drawing which shows the intermediate heat exchanger 23 of this embodiment in the form of a plan view. Fig. 16 is a cross-sectional view taken along line A-A' in Fig. 15. Fig. 17 is a cross-sectional view taken along line B-B' in Fig. 16, with its end portion sectioned in the vertical direction of the intermediate heat exchanger 23 of this embodiment.

The intermediate heat exchanger 23 has such a configuration that four inner tubes are provided in a single outer tube. The four inner tubes 23a, 23b are arranged in such a manner that in a cross section perpendicular to the direction of the central axis (longitudinal direction) of an outer tube 23c, that is, in the cross section shown in Fig. 16, a figure formed by connecting the centers of the cross sections of the four inner tubes adjacent to each other with straight lines forms a quadrate (square). Two (a predetermined number) out of the four inner tubes are the heat transfer tubes for refrigerant for adjusting air temperature (heat transfer tubes for circuit for refrigerant for adjusting air temperature) 23a, while the other two inner tubes are the heat transfer tubes for refrigerant for supplying hot water (heat transfer tubes for circuit for refrigerant for supplying hot water) 23b. In addition, the four inner tubes are arranged within the heat transfer tube for heating medium 23c, which is an outer tube, in a manner that the centers of the cross sections of the heat transfer tubes for refrigerant for adjusting air temperature 23a and the centers of the cross sections of the heat transfer tubes for refrigerant for supplying hot water 23b are positioned at the opposite corners of the square.

It should be noted that in this embodiment, the heat transfer tube for heating medium 23c is a first heat transfer tube; the two heat transfer tubes for refrigerant for adjusting air temperature 23a are second heat transfer tubes; and the two heat transfer tubes for refrigerant for supplying hot water 23b are third heat transfer tubes.

These heat transfer tubes 23a, 23b, 23c are all circular tubes, and the heat transfer tubes for refrigerant for adjusting air temperature 23a and the heat transfer tubes for refrigerant for supplying hot water 23b are circular tubes having the same inside diameter. In addition, a joined part 101 of the heat transfer tubes for refrigerant for adjusting air temperature 23a and the heat transfer tubes for refrigerant for supplying hot water 23b which are adjacent to each other are bonded by brazing, and the heat transfer tubes for refrigerant for adjusting air temperature 23a positioned at the opposite corners are arranged at an interval in the vertical direction in Fig. 16, while the heat transfer tubes for refrigerant for supplying hot water 23b positioned at the opposite corners are arranged at an interval in the horizontal direction in Fig. 16. That is, the heat transfer tubes for refrigerant for adjusting air temperature 23a and the heat transfer tubes for refrigerant for supplying hot water 23b are bonded by brazing, but the heat transfer tubes for refrigerant for adjusting air temperature 23a are not directly bonded to each other, and likewise, the heat transfer tube for refrigerant for supplying hot water 23b are not directly bonded to each other.

Because of this structure, in the operation pattern in which cold/warm water of the heating medium circuit 7 does not circulate within the outer tube and heat is exchanged between the low-temperature-side refrigerant and high-temperature-side refrigerant circulating through the inner tube as shown in, for example, No. 2-0a and No. 2-0b, the heat transfer tubes of the inner tubes are bonded to each other by the joined part 101. Therefore, the low-temperature-side refrigerant and high-temperature-side refrigerant can exchange heat via this joined part. In addition, in this operation pattern, it is desirable that the low-temperature-side refrigerant and the high-temperature-side refrigerant are countercurrents. This can further improve the heat transfer performance.

Moreover, two each of the heat transfer tubes for refrigerant for adjusting air temperature 23a and the high-temperature-side heat transfer tubes (heat transfer tube for refrigerant for supplying hot water) 23b are provided in this Example. By providing a multiple number of inner tubes respectively, the number of the joined parts 101 between the heat transfer tubes for refrigerant for adjusting air temperature 23a and the heat transfer tubes for refrigerant for supplying hot water 23b is increased, and therefore the heat transfer performance of the low-temperature-side refrigerant and the high-temperature-side refrigerant can be improved.

Moreover, in the operation pattern in which heat is exchanged between the heat transfer tube for heating medium 23c circulating through the outer tube and either the heat transfer tube for refrigerant for adjusting air temperature 23a or the heat transfer tube for refrigerant for supplying hot water 23b circulating through the inner tube as shown in for example, No. 3-1, No. 4-1 and No. 5-1, heat is exchanged between the outer tube and the inner tubes, and therefore heat exchange is possible. Moreover, since a multiple number of the inner tubes are provided respectively, the heat transfer area between the outer tube and the inner tube is increased than in the case where the number of the heat transfer tubes is one each. Therefore, the heat transfer performance can be improved. In addition, the directions of the flows of the refrigerant and the heating medium at this time are desirably countercurrents. This can further improve the heat transfer performance. Moreover, since the inner tubes 23a, 23b and the outer tube 23c are all circular tubes, the intermediate heat exchanger 23 of this embodiment is a heat exchanger which can be produced at low costs and having excellent pressure resistance.

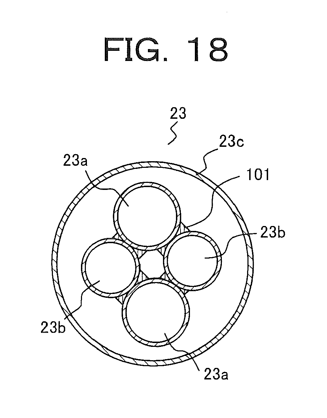

Next, the intermediate heat exchanger 23 according to the second embodiment of the present invention will be described with reference to Fig. 18. The intermediate heat exchanger 23 according to this embodiment is characterized in that the inside diameters of the inner tubes are different. Stated more specifically, in this embodiment, the inside diameter of the heat transfer tubes for refrigerant for adjusting air temperature 23a is larger than the inside diameter of the heat transfer tubes for refrigerant for supplying hot water 23b. This constitution allows a reduction in pressure loss in the inner tubes even when pressure loss is greatly different due to the properties and circulation flow rates of the refrigerants between which heat is exchanged, thereby enhancing energy saving.

It should be noted that the inner tubes according to this embodiment are also arranged similarly to the first embodiment. That is, in the cross section shown in Fig. 18, the inner tubes are arranged in such a manner that a figure formed by connecting the centers of the cross sections of the four inner tubes adjacent to each other with straight lines forms a diamond shape (square). Two of the four inner tubes are the heat transfer tubes for refrigerant for adjusting air temperature 23a, while the other two inner tubes are the heat transfer tubes for refrigerant for supplying hot water 23b. In addition, the four inner tubes are arranged within the heat transfer tube for heating medium 23c, which is an outer tube, in a manner that the centers of the cross sections of the heat transfer tubes for refrigerant for adjusting air temperature 23a and the centers of the cross sections of the heat transfer tubes for refrigerant for supplying hot water 23b are positioned at the opposite corners of the diamond shape.

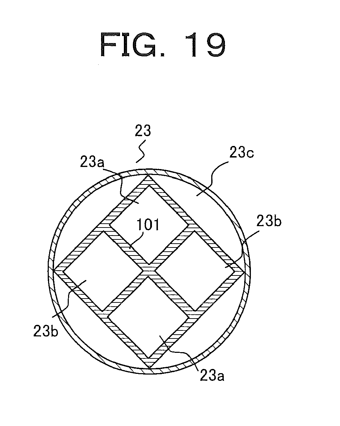

Next, the intermediate heat exchanger 23 according to the third embodiment of the present invention will be described with reference to Fig. 19. The intermediate heat exchanger 23 according to this embodiment has such a configuration that four inner tubes are provided in a single outer tube. Two of the inner tubes are the heat transfer tubes for refrigerant for adjusting air temperature 23a; the other two inner tubes are the heat transfer tubes for refrigerant for supplying hot water 23b; and the outer tube is the heat transfer tube for heating medium 23c. The shape of the outer tube is circular. The four inner tubes are rectangular tubes and integral casting. Accordingly, the side faces of the inner tubes serve as the joined part 101. In addition, the heat transfer tubes are disposed so that the heat transfer tubes for refrigerant for supplying hot water 23b and the heat transfer tubes for refrigerant for adjusting air temperature 23a are adjacent to each other.

It should be noted that the inner tubes according to this embodiment are also arranged in such a manner that a square is formed when the centers of the cross sections of the four inner tubes are connected with straight lines, as in the first embodiment. In addition, the edges (corners) of the integral casting inner tubes are so configured to be in physical contact with the inner circumferential surface of the outer tube. That is, the length of the diagonal line which is a straight line connecting the corners of the integral casting inner tubes positioned at the opposite corners and the diameter of the outer tube are equal in length.

In this embodiment, integrally casting the four rectangular inner tubes increases the area of the joined part 101 between the adjacent inner tubes, and improves the heat transfer performance of the refrigerant in the heat transfer tubes for refrigerant for supplying hot water 23b and the heat transfer tubes for refrigerant for adjusting air temperature 23a circulating through the inner tubes. Moreover, since the rectangular end portions of the integral casting inner tubes are in contact with the outer tube, the inner tubes can be easily disposed at the center of the outer tube. This allows the heating medium flowing inside the outer tube to flow uniformly around the inner tubes, and therefore heat can be efficiently exchanged between the heating medium and the refrigerant.

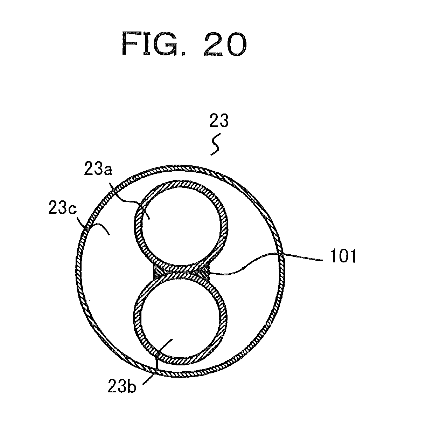

Next, the intermediate heat exchanger 23 according to the fourth embodiment of the present invention will be described with reference to Fig. 20. An intermediate heat exchanger 20 according to this embodiment is so configured that two inner tubes are provided in a single outer tube. One of the inner tubes is the heat transfer tube for refrigerant for adjusting air temperature 23a; the other inner tube is the heat transfer tube for refrigerant for supplying hot water 23b; and the outer tube is the heat transfer tube for heating medium 23c. The heat transfer tube for refrigerant for adjusting air temperature 23a and the heat transfer tube for refrigerant for supplying hot water 23b are bonded by brazing at the joined part 101. Explained in more detail, the two inner tubes are disposed one above the other so that the straight line connecting the center of a cross section of the single heat transfer tube for refrigerant for adjusting air temperature 23a and the center of a cross section of the single heat transfer tube for refrigerant for supplying hot water 23b runs along the vertical direction. The portion where the upper heat transfer tube for refrigerant for adjusting air temperature 23a and the lower the heat transfer tube for refrigerant for supplying hot water 23b are in contact with each other is bonded by brazing. It should be noted that the two inner tubes are circular tubes having the same inside diameter.

According to this embodiment, its simple constitution allows producing the intermediate heat exchanger 23 economically and easily. Moreover, its small number of inner tubes allows reducing the diameter of the outer tube containing the inner tubes, which leads to size reduction of the intermediate heat exchanger 23 and compacting of the system.

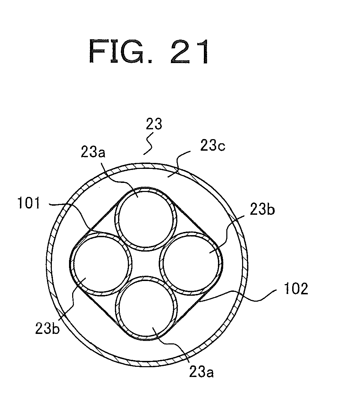

Next, the intermediate heat exchanger 23 according to the fifth embodiment of the present invention will be described with reference to Fig. 21. The intermediate heat exchanger 23 according to this embodiment has such a configuration that four inner tubes are provided in a single outer tube. Two of the inner tubes are the heat transfer tubes for refrigerant for adjusting air temperature 23a; the other two inner tubes are the heat transfer tubes for refrigerant for supplying hot water 23b; and the outer tube is the heat transfer tube for heating medium 23c. The inner tubes are arranged in such a manner that the heat transfer tubes through which different refrigerants circulate are adjacent to each other. This arrangement of the inner tubes is the same as in the first embodiment.

Herein, a major feature of this embodiment lies in the bonding method of the inner tubes. That is, in the first, second, and fourth embodiments described above, a metallurgical bonding method, i. e., brazing is used in bonding of the inner tubes. This embodiment, however, is largely characterized in that is used binding a mechanical bonding method, by a band 102. Stated more specifically, the four inner tubes in this Example are bundled, and their outer peripheries are fastened by the band 102. By this constitution, the side faces of the heat transfer tubes for refrigerant for adjusting air temperature 23a adjacent to each other and the side faces of the heat transfer tubes for refrigerant for supplying hot water 23b are physically bonded at the joined part 101. It should be noted that the four inner tubes used are circular tubes having the same inside diameter.

According to this Example, no filler material is necessary, and therefore production steps of the inner tubes can be shortened, and the inner tubes can be produced at low costs. Moreover, since the heat transfer tubes are in direct contact, heat resistance can be lower than in the case where heat is exchanged via the filler material.

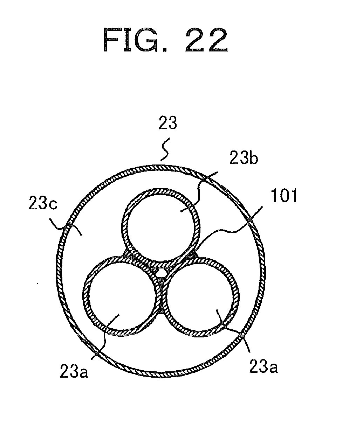

Next, the intermediate heat exchanger 23 according to the sixth embodiment of the present invention will be described with reference to Fig. 22. The intermediate heat exchanger 23 according to this Example is so configured that three inner tubes are provided in a single outer tube. Two of the inner tubes are the heat transfer tubes for refrigerant for adjusting air temperature 23a; the other inner tube is the heat transfer tubes for refrigerant for supplying hot water 23b; and the outer tube is the heat transfer tube for heating medium 23c. The three inner tubes are arranged in such a manner that, a cross section perpendicular to the direction of the central axis (longitudinal direction) of the outer tube 23c, that is, in the cross section shown in Fig. 22, an equilateral triangle (triangle) is formed when the centers of cross sections of the two heat transfer tube for refrigerant for adjusting air temperature 23a and the center of a cross section of the single heat transfer tube for refrigerant for supplying hot water 23b are connected with straight lines. In addition, the heat transfer tubes for refrigerant for adjusting air temperature 23a and the heat transfer tube for refrigerant for supplying hot water 23b which are adjacent to each other are bonded by brazing at the joined part 101, while the adjacent heat transfer tubes for refrigerant for adjusting air temperature 23a are bonded to each other by brazing at the joined part 101.

According to this Example, when there is a great difference in the flow rate or pressure between the two types of refrigerants circulating through the inner tubes, pressure loss can be suppressed by changing the number of heat transfer tubes accordingly.

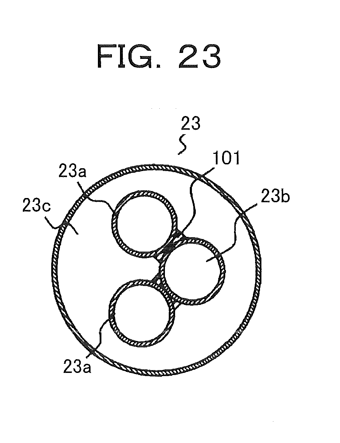

Next, the intermediate heat exchanger 23 according to the seventh embodiment of the present invention will be described with reference to Fig. 23. The intermediate heat exchanger 23 according to this Example is so configured that three inner tubes are provided in a single outer tube. Two of the inner tubes are the heat transfer tubes for refrigerant for adjusting air temperature 23a; the other inner tube is the heat transfer tube for refrigerant for supplying hot water 23b; and the outer tube is the heat transfer tube for heating medium 23c. The arrangement of the three inner tubes is the same as that in the sixth embodiment described above. That is, a cross section of the outer tube 23c perpendicular to the direction of its central axis (longitudinal direction), that is, in the cross section shown in Fig. 23, the three inner tubes are arranged in such a manner that an isosceles triangle (triangle) is formed when the centers of the cross sections of the two heat transfer tubes for refrigerant for adjusting air temperature 23a and the center of the cross section of the single heat transfer tube for refrigerant for supplying hot water 23b are connected with straight lines.

In addition, the heat transfer tubes through which different refrigerants circulate, that is, each of the heat transfer tubes for refrigerant for adjusting air temperature 23a and the heat transfer tube for refrigerant for supplying hot water 23b are bonded by brazing at the joined part 101, while the heat transfer tubes through which the same refrigerant circulates, that is, the two heat transfer tubes for refrigerant for adjusting air temperature 23a are arranged at an interval so that cold/warm water circulates therebetween.

According to this Example, in such an operation mode that heat is exchanged between the inner tubes and the outer tube, the heat transfer tubes through which the same refrigerant circulates do not have a joined part. Therefore, the absence of the joined part increases the heat transfer area between the outer tube and the inner tubes, thereby improving the heat transfer performance.

As described above, the air-conditioning hot-water supply system according to this Example is a system which can optionally operate an air conditioner and a water heater simultaneously at high energy efficiencies regardless of the magnitudes of air conditioning/hot water supply load by using the intermediate heat exchanger 23 described above. Moreover, natural energies such as solar heat and terrestrial heat can be utilized as the heat source for air conditioning and supplying hot water, and therefore energy saving of the air-conditioning hot-water supply system can be further enhanced.

### REFERENCE SIGNS LIST

5... Low-temperature-side refrigerant circuit (circuit for refrigerant for adjusting air temperature), 6... High-temperature-side refrigerant circuit (circuit for refrigerant for supplying hot water), 7... Circuit for brine for heat source (heating medium circuit), 23... Intermediate heat exchanger, 23a... Heat transfer tube for refrigerant for adjusting air temperature (heat transfer tube for circuit for refrigerant for adjusting air temperature), 23b... Heat transfer tube for refrigerant for supplying hot water (heat transfer tube for circuit for refrigerant for supplying hot water), 23c... Heat transfer tube for heating medium (heat transfer tube for heating medium circuit), 100... Air hot water supply system, 101... Joined part

## Claims

1. An intermediate heat exchanger for use in an air-conditioning hot-water supply system comprising a circuit for refrigerant for adjusting air temperature, a circuit for refrigerant for supplying hot water, and a heating medium circuit for circulating a heating medium which thermal storage by exchanging heat with a refrigerant circulating through the circuit for refrigerant for adjusting air temperature and the circuit for refrigerant for supplying hot water, the intermediate heat exchanger being so configured that heat is exchanged between a refrigerant circulating through the circuit for refrigerant for adjusting air temperature, a refrigerant circulating through the circuit for refrigerant for supplying hot water, and a heating medium circulating through the heating medium circuit,
the intermediate heat exchanger including an outer tube and a plurality of inner tubes, the outer tube being used as a first heat transfer tube connected by a pipe to any one of the three circuits: the circuit for refrigerant for supplying hot water and the circuit for refrigerant for adjusting air temperature and the heating medium circuit, a predetermined number of inner tubes out of the plurality of inner tubes being used as second heat transfer tubes connected by a pipe to one of the other two circuits, the other inner tubes being used as third heat transfer tubes connected by a pipe to the other two circuits, and the second heat transfer tubes and the third heat transfer tubes being bonded.

2. The intermediate heat exchanger according to claim 1, wherein the plurality of inner tubes are arranged in such a manner that, in a cross section perpendicular to the direction of the central axis of the outer tube, a figure formed by connecting the centers of cross sections of the four inner tubes adjacent to each other with straight lines becomes a square, and are arranged in such a manner that the centers of cross sections of the inner tubes constituting the second heat transfer tubes and the centers of cross sections of the inner tubes constituting the third heat transfer tubes are positioned at the opposite corners of the square, and the inner tubes adjacent to each other are bonded.

3. The intermediate heat exchanger according to claim 2, wherein the inner tubes positioned at the opposite corners of the square are arranged at an interval from each other.

4. The intermediate heat exchanger according to claim 1, wherein the plurality of inner tubes are arranged in such a manner that, in a cross section perpendicular to the direction of the central axis of the outer tube, a figure formed by connecting the centers of cross sections of the three inner tubes adjacent to each other with straight lines becomes a triangle, and the three inner tubes adjacent to each other include the inner tubes constituting the second heat transfer tubes and the inner tubes constituting the third heat transfer tubes, and
the inner tubes constituting the second heat transfer tubes and the inner tubes constituting the third heat transfer tubes adjacent to each other are bonded.

5. The intermediate heat exchanger according to claim 4, wherein the inner tubes constituting the second heat transfer tubes adjacent to each other, or the inner tubes constituting the third heat transfer tubes adjacent to each other are arranged at an interval.

6. The intermediate heat exchanger according to any one of claims 1 to 5, wherein the inner tubes are bonded by brazing.

7. The intermediate heat exchanger according to any one of claims 1 to 5, wherein the inner tubes are bonded by bundling the plurality of inner tubes with a band.

8. The intermediate heat exchanger according to any one of claims 1 to 7, wherein a predetermined number of the plurality of inner tubes are used as heat transfer tubes for the circuit for refrigerant for adjusting air temperature, the other inner tubes are used as heat transfer tubes for the circuit for refrigerant for supplying hot water, and the outer tube is used as a heat transfer tube for the heating medium circuit.

9. The intermediate heat exchanger according to any one of claims 1 to 8, wherein the plurality of inner tubes are circular tubes.

10. The intermediate heat exchanger according to any one of claims 1 to 8, wherein the plurality of inner tubes are rectangular tubes.

11. The intermediate heat exchanger according to claim 1 or 2, wherein the plurality of inner tubes are integral casting.

12. The intermediate heat exchanger according to any one of claims 1 to 11, wherein the plurality of inner tubes have different diameters.

13. The intermediate heat exchanger according to any one of claims 1 to 12, wherein when heat is exchanged between a high-pressure-side refrigerant of the circuit for refrigerant for adjusting air temperature and a low-pressure-side refrigerant of the circuit for refrigerant for supplying hot water in the intermediate heat exchanger, the refrigerant flowing through the circuit for refrigerant for adjusting air temperature and the refrigerant flowing through the circuit for refrigerant for supplying hot water are countercurrents.

14. The intermediate heat exchanger according to any one of claims 1 to 13, wherein when heat is exchanges between the low-pressure-side refrigerant of the circuit for refrigerant for adjusting air temperature, the low-pressure-side refrigerant of the circuit for refrigerant for supplying hot water, and cold/warm water of the heating medium circuit in the intermediate heat exchanger, the low-pressure-side refrigerant of the circuit for refrigerant for adjusting air temperature and the low-pressure-side refrigerant of the circuit for refrigerant for supplying hot water are countercurrents relative to the cold/warm water of the heating medium circuit.

15. An air-conditioning hot-water supply system comprising a circuit for refrigerant for adjusting air temperature, a circuit for refrigerant for supplying hot water, and a heating medium circuit for circulating a heating medium which exchanges heat with a refrigerant circulating through the circuit for refrigerant for adjusting air temperature and the circuit for refrigerant for supplying hot water and thermal storage, and
the air-conditioning hot-water supply system incorporating the intermediate heat exchanger according to any one of claims 1 to 14.
